# EUROPEAN PATENT SPECIFICATION

(11) **EP 4 518 259 B1**
(45) Date of publication and mention of the grant of the patent: **01.07.2026**
(21) Application number: 23855152.7
(22) Date of filing: 16.08.2023
(51) Int. Cl.: F24F 11/54, F24F 11/88, H04L 25/02, H04B 3/54

(54) **AIR CONDITIONING DEVICE AND MASTER DEVICE IMPLEMENTING THE CONTROL OF FAIL-SAFE RESISTANCE CONNECTION TO BOTH ENDS OF COMMUNICATION LINES IN DIFFERENTIAL VOLTAGE COMMUNICATION**
KLIMAANLAGE UND MASTERGERÄT ZUR STEUERUNG EINER AUSFALLSICHEREN WIDERSTANDSVERBINDUNG AN BEIDEN ENDEN VON KOMMUNIKATIONSLEITUNGEN IN EINER DIFFERENZSPANNUNGSKOMMUNIKATION
DISPOSITIF DE CLIMATISATION ET DISPOSITIF MAÎTRE METTANT EN AUVRE LA COMMANDE DE LA CONNEXION DE RÉSISTANCE DE SÉCURITÉ AUX DEUX EXTRÉMITÉS DES LIGNES DE COMMUNICATION DANS UNE COMMUNICATION À TENSION DIFFÉRENTIELLE

(30) Priority: 19.08.2022 KR 20220104332; 11.01.2023 KR 20230004287
(43) Date of publication of application: 05.03.2025
(73) Proprietor: Samsung Electronics Co., Ltd., Suwon-si, Gyeonggi-do 16677 (KR)
(72) Inventor: JUNG, Rakchung, Suwon-si, Gyeonggi-do 16677 (KR); KIM, Doyeon, Suwon-si, Gyeonggi-do 16677 (KR); JO, Suho, Suwon-si, Gyeonggi-do 16677 (KR); HUR, Taebok, Suwon-si, Gyeonggi-do 16677 (KR)
(74) Representative: Walaski, Jan Filip
(86) International application number: PCT/KR2023/012130
(87) International publication number: WO 2024/039185

(56) References cited:
- CN-A- 112 556 131
- JP-A- H0 677 964
- JP-B2- 3 449 007
- KR-A- 20120 076 993
- KR-B1- 100 802 072
- KR-B1- 102 072 740
- KR-B1- 102 245 952
- US-A1- 2023 332 798
- ANONYMOUS: "AN INTRODUCTION TO RS485", TECHNICAL REPORT - DIPARTIMENTO DI FISICA, UNIVERSITÀ DEGLI STUDI DI MILANO, 1 January 2015 (2015-01-01), pages 1 - 21, XP093139499, Retrieved from the Internet <URL:https://air.unimi.it/bitstream/2434/284647/2/Relazione%20RS485.pdf> [retrieved on 20240311]

## Description

### [Technical Field]

The disclosure relates to a control method of connecting fail-safe resistors to ends of communication lines for performing differential voltage communication, and a communication device employing the control method.

### [Background Art]

RS-485 communication or Modbus communication is one of the communication methods commonly used in various industrial fields, and is a communication method using a differential voltage. RS-485 communication and Modbus communication have high stability in data transmission, enabling long-distance communication and connection of multiple slave devices. However, when the voltage level between two communication lines is unstable in such differential voltage communication, there is a high possibility of an error occurring resulting in communication not being appropriately performed, and thus, it is necessary to clearly maintain the voltage level between the communication lines.

KR 102 245 952 B1 discloses an air conditioner which uses RS-485 communication between an outdoor unit and a plurality of indoor units over two communication lines, where one of the units communicates as a master device and the other units are slave devices. The system is configured such that a pull-up resistor and pull-down resistor in the master device are connected to the first and second communication lines, respectively, while the pull-up and pull-down resistors within the slave devices are not connected to the communication lines. JP 3 449007 B2 discloses a multiplex communication device which transmits signals over a single communication line between first and second communication means.

### [Disclosure]

### [Technical Solution]

According to the invention, there is provided an air conditioner device according to claim 1, and a master device according to claim 11. Preferred features of the invention are set out in the dependent claims.

### [Description of Drawings]

FIG. 1 is a connection diagram in which two differential voltage communication devices are connected in reverse polarity to each other (reverse connection).
FIG. 2 is a connection diagram in which a plurality of slave devices are connected to one master device and at least one slave device among the plurality of slave devices is connected in reverse polarity, according to an embodiment of the disclosure.
FIG. 3A is a connection diagram illustrating an embodiment where a master device and a slave device are connected to each other, fail-safe resistors are connected to only the side of the master device, according to an embodiment of the disclosure.
FIG. 3B is a connection diagram illustrating an embodiment where communication lines are connected between a master device and a slave device, fail-safe resistors are connected to only the side of the slave device, according to an embodiment of the disclosure.
FIG. 3C is a connection diagram illustrating an embodiment where communication lines are connected between a master device and a slave device, fail-safe resistors are separated from each other and connected to the respective communication lines, according to an embodiment of the disclosure.
FIG. 3D is a connection diagram illustrating an embodiment where communication lines are connected between a master device and a slave device, fail-safe resistors are separated from each other and connected to the respective communication lines, according to an embodiment of the disclosure.
FIG. 4A is a connection diagram illustrating an embodiment where a master device is connected to a plurality of slave devices, fail-safe resistors are connected to the side of the master device, according to an embodiment of the disclosure.
FIG. 4B is a connection diagram illustrating an embodiment where a master device is connected to a plurality of slave devices, fail-safe resistors are connected to the side of the slave device, according to an embodiment of the disclosure.
FIG. 4C is a connection diagram illustrating an embodiment where a master device is connected to a plurality of slave devices, fail-safe resistors are connected to the side of the slave device, according to an embodiment of the disclosure.
FIG. 5 is a flowchart illustrating a method of connecting fail-safe resistors to only one communication device and disconnecting fail-safe resistors from the other communication devices, according to an embodiment of the disclosure.
FIG. 6 is a connection diagram illustrating that a master device assigns different addresses to slave devices, according to an embodiment of the disclosure.
FIG. 7 is a connection diagram illustrating that a master device obtains slave device information from a slave device, according to an embodiment of the disclosure.
FIG. 8 is a connection diagram illustrating that communication lines are disconnected from fail-safe resistors by switches, according to an embodiment of the disclosure.
FIG. 9 is a connection diagram illustrating that communication lines are connected to fail-safe resistors by switches, according to an embodiment of the disclosure.
FIG. 10 is a connection diagram in which a pull-up resistor and a pull-down resistor are connected to two communication lines, respectively, according to a voltage level between ends of the communication lines, according to an embodiment of the disclosure.
FIG. 11 is a connection diagram in which only a pull-up resistor and a pull-down resistor are connected to two communication lines on the side of a master device, respectively, according to a voltage level between ends of the communication lines, according to an embodiment of the disclosure.
FIG. 12 is a connection diagram in which a pull-up resistor and a pull-down resistor on the side of a master device are connected to two communication lines, respectively, according to an embodiment of the disclosure.
FIG. 13 is a connection diagram in which a pull-up resistor and a pull-down resistor on the side of a slave device are connected to two communication lines, respectively, according to an embodiment of the disclosure.
FIG. 14 is a connection diagram in which a fixed pull-up resistor and pull-down resistor on the side of a slave device are connected in reverse polarity to two communication lines, respectively, according to an embodiment of the disclosure.
FIG. 15 is a sequence diagram illustrating a process of connecting fail-safe resistors in differential voltage communication, according to an embodiment of the disclosure.
FIG. 16 is a block diagram of a master device capable of performing differential voltage communication, according to an embodiment of the disclosure.
FIG. 17 is a block diagram of a slave device capable of performing differential voltage communication, according to an embodiment of the disclosure.
FIG. 18 is a diagram illustrating a configuration of a master device and slave devices in an air conditioner device, according to an embodiment of the disclosure.

### [Mode for Invention]

As used herein, the expression "at least one of a, b, or c" may indicate only a, only b, only c, both a and b, both a and c, both b and c, all of a, b, and c, or variations thereof.

The terms used herein will be briefly described, and then an embodiment of the disclosure will be described in detail.

Although the terms used herein are selected from among common terms that are currently widely used in consideration of their functions in an embodiment of the disclosure, the terms may be different according to an intention of one of ordinary skill in the art, a precedent, or the advent of new technology. Also, in particular cases, the terms are discretionally selected by the applicant of the disclosure, in which case, the meaning of those terms will be described in detail in the corresponding description of an embodiment of the disclosure. Therefore, the terms used herein are not merely designations of the terms, but the terms are defined based on the meaning of the terms and content throughout the disclosure.

Throughout the disclosure, when a part "includes" an element, it is to be understood that the part may additionally include other elements rather than excluding other elements as long as there is no particular opposing recitation. In addition, as used herein, the terms such as "...er (or)", "... unit", "... module", etc., denote a unit that performs at least one function or operation, which may be implemented as hardware or software or a combination thereof.

According to an embodiment of the disclosure which does not form part of the invention, provided are a method of connecting a fail-safe resistor across a communication line for preventing communication from failing due to an unstable voltage across the communication line in differential voltage communication, and a master device and a slave device in which such connection of a fail-safe resistor is performed.

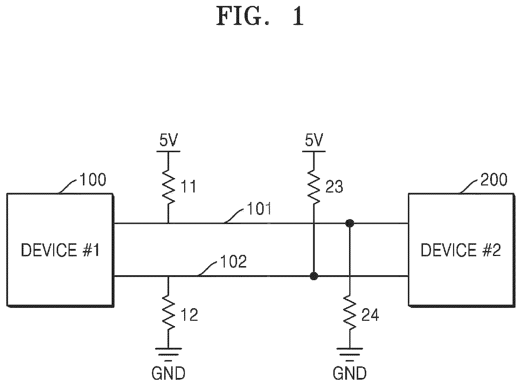

FIG. 1 is a connection diagram in which two differential voltage communication devices are connected in reverse polarity to each other.

Differential voltage communication supports a longer transmission distance and a higher transmission rate compared to the RS-232 method, which is the main protocol of one-to-one communication. In particular, differential voltage communication enables one-to-many-devices multi-drop configuration. In RS-485, which is a representative protocol of differential voltage communication, only electrical characteristics of a generator and a receiver are defined, and a physical layer or a communication protocol does not need to be specified. RS-485 communication may be used effectively over long distances and in electrically noisy environments, and is useful in applications such as industrial control systems.

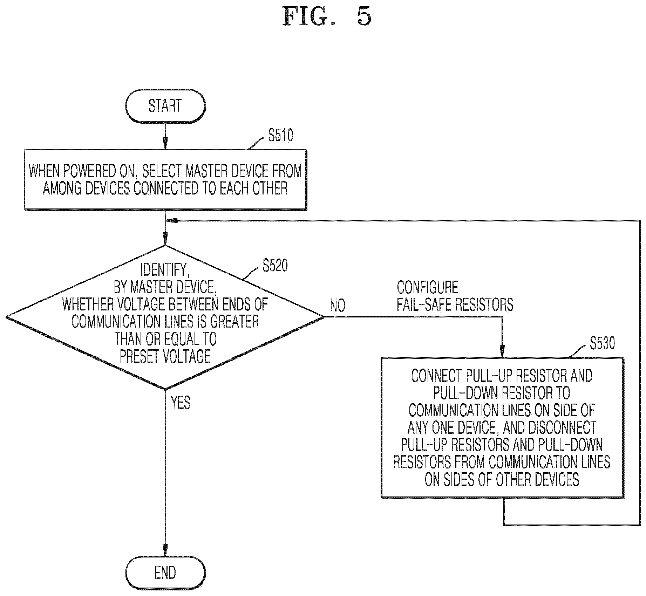

Referring to FIG. 1, the polarity of the connection between a pull-up resistor 11 and a pull-down resistor 12 and communication lines on the side of device #1 100 is opposite to the polarity of the connection between a pull-up resistor 23 and a pull-down resistor 24 and the communication lines on the side of device #2 200, and thus, device #1 100 and device #2 200 are connected in reverse polarity to each other. In other words, device #1 100 and device #2 200 may perform differential voltage communication through a first communication line 101 and a second communication line 102. The first communication line 101 on the side of device #1 100 is connected to the pull-up resistor 11 connected to 5V, which is a signal power supply, and the second communication line 102 on the side of device #1 100 is connected to the pull-down resistor 12 connected to a signal ground GND. The first communication line 101 on the side of device #2 200 may perform differential voltage communication with device #1 100 , which is connected to a signal ground GND via the pull-down resistor 24 , and the second communication line 102 on the side of device #2 200, which is connected to the signal power supply 5V via the pull-up resistor 23. Thus, device #1 100 and device #2 200 are connected in reverse polarity to each other. In the differential voltage communication according to FIG. 1, one of the two devices may be a master device and the other device may be a slave device. In an embodiment of the disclosure, device #1 100 may be a master device and device #2 200 may be a slave device. A method of determining a master device and a slave device in differential voltage communication will be described in detail below with reference to FIG. 5.

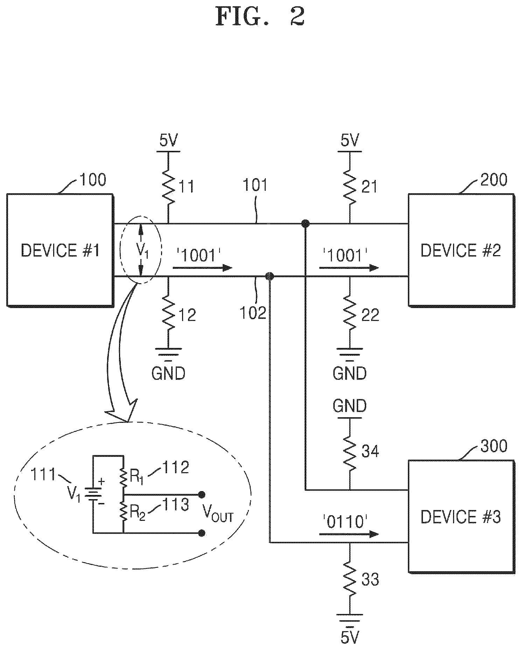

FIG. 2 is a connection diagram in which a plurality of slave devices are connected to one master device and at least one slave device is connected in reverse polarity, according to an embodiment of the disclosure.

Referring to FIG. 2, two communication lines 101 and 102 on the side of device #1 100 are respectively connected to the pull-up resistor 11 and the pull-down resistor 12, and the two communication lines 101 and 102 on the side of device #2 200 are respectively connected to a pull-up resistor 21 and a pull-down resistor 22, with the same polarity. However, the first communication line 101 on the side of device #3 300 is capable of performing differential voltage communication with device #1 100, device #3 300 is connected to a signal ground GND via a pull-down resistor 34 , and the second communication line 102 on the side of device #3 300 is connected to a signal power supply 5V via a pull-up resistor 33 . Thus, it may be said that device #1 100 and device #2 200 are connected in reverse polarity to device #3 300. In the differential voltage communication according to FIG. 2, device #1 100 may operate as a master device, and device #2 200 and device #3 300 may operate as slave devices.

In differential voltage communication, when one or more slave devices are connected in reverse polarity to a master device as illustrated in FIGS. 1 and 2, a communication failure may occur due to a drop in voltage level between two communication lines. Therefore, it is necessary to prevent a communication failure due to such reverse connection. In differential voltage communication, a communication failure does not occur when the voltage level between the first communication line 101 and the second communication line 102 is stably maintained within a preset level. In addition, a slave device connected in reverse polarity to a master device is unable to perform seamless communication with the master device. For example, as illustrated in FIG. 2, when device #1 100 as a master device transmitted binary data '1001' to device #2 200 and device #3 300, device #2 200 connected in normal polarity to device #1 100 may receive the original data '1001' as it is from device #1 100, whereas device #3 300 connected in reverse polarity to device #1 100 may receive '0110', which is the inverse of '1001'. The master device may transmit inquiry data (e.g., '1001' as above) regarding whether data is properly received, in order to exclude such a reversely connected device from communication targets, and the slave device may transmit response data (e.g., '1100') according to an agreement, to the master device. When the response data '1100' is normally received from the slave device, the master device may recognize that the slave device is connected in normal polarity to the master device and thus able to normally communicate with the master device. In order to identify whether a device not having responded to the inquiry data is connected in reverse polarity to the master device, the master device may transmit inverse data of the inquiry data (e.g., '0110', which is the inverse data of '1001' above) to the device to determine whether the device properly receives the data. The reversely connected slave device having recognized the inverse data as '1001' due to the reverse connection may recognize the inverse data as the inquiry data and thus transmit the response data (e.g., '1100') to the master device. Based on receiving inverse data (e.g., '0011', which is inverse data of '1100') of the response data that is transmitted by the slave device in response to the above inverse data '0110', and the master device may confirm that the slave device is connected in reverse polarity to the master device. The master device may exclude the slave device that is confirmed as being connected in reverse polarity to the master device, from the communication targets.

In differential voltage communication, as a voltage level between the first communication line 101 and the second communication line 102, Vout may be measured through divider resistors R₁ 112 and R₂ 113 on the side of device #1 100 that is the master device, as illustrated in FIG. 2. The voltage level between the two communication lines may be measured not only on the side of the master device but also on the side of a slave device, through the same divider resistor circuit. In FIG. 2, V₁ 111 is a voltage level read between the two communication lines, and R₁ 112 and R₂ 113 are divider resistors included in device #1 100 for monitoring the voltage level. Vout is a voltage read by a particular port of device #1 100 through the divider resistors. For example, when V₁ = 12 V, R₁ = 2 kΩ, and R₂ = 1 kΩ, Vout = 4 V. Vout varies in proportion to a change in V₁. By using Vout read through the particular port, a microcomputer of device #1 100 identifies the voltage level by referring to a table of monitored values stored in a memory and respective actual voltage level values between the two communication lines, or by determining, V₁ through conversion according to the divider resistors in a software manner.

For example, Table 1 below shows monitored voltage level values and respective actual voltage values corresponding thereto, for identifying the voltage level between the two communication lines.

**[Table 1]**

| Monitored Vout stored in memory | Monitored voltage level value V₁ between two communication lines |
|---|---|
| 4V | 12V |
| 3V | 9V |
| ... | ... |
| 2V | 6V |

Thus, the master device according to the disclosure may maintain stable differential voltage communication and solve a communication failure by monitoring the voltage between ends of two communication lines, to connect fail-safe resistors to only the side of one communication device and disconnect fail-safe resistors from the side of the other communication device, during the differential voltage communication.

As described above, because RS-485 communication uses a differential voltage method, communication may be performed with two communication lines. In RS-485 communication, there is a case in which the idle voltage is in a floating state due to the absence of input to communication lines, and in this case, an unstable communication state may occur in which the voltage level between ends of the communication lines is unclear, and thus, it is difficult to determine whether communication data or a communication signal is high or low. In RS-485 communication or Modbus communication, fail-safe resistors may be connected to ends of communication lines to stabilize the voltage between the communication lines. A pull-up resistor as a fail-safe resistor is connected to one of two communication lines, and a pull-down resistor as a fail-safe resistor is connected to the other communication line.

When a plurality of slave devices are connected in reverse polarity to one master device, the voltage level may drop, resulting in a communication failure. In the disclosure, the master device may increase the communication success rate by monitoring the voltage between ends of the two communication lines through a voltage sensor, and based on the monitored voltage between the ends of the communication line being less than or equal to a preset voltage (e.g., 0.2 V or less as a logic high voltage), connecting fail-safe resistors to only one of the master device and a plurality of slave devices and disconnecting fail-safe resistors from the other devices.

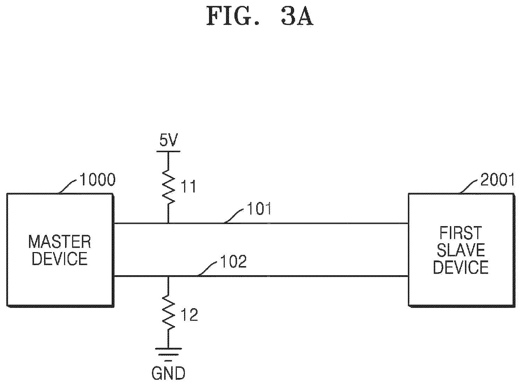

FIG. 3A is a connection diagram illustrating an embodiment where a master device and a slave device are connected to each other, fail-safe resistors are connected to only the side of the master device, according to an embodiment of the disclosure.

Referring to FIG. 3A, only one pull-up resistor 11 is connected to the first communication line 101 connecting between a master device 1000 and a first slave device 2001 according to the disclosure, and only one pull-down resistor 12 is connected to the second communication line 102. Here, the pull-up resistor 11 may be connected to a signal power supply on a printed circuit board (PCB) of the master device 1000, and the pull-down resistor 12 may be connected to a signal ground GND on the PCB of the master device 1000. As described above, in RS-485 communication or Modbus communication, when one communication line is clearly connected to a high level and the other communication line is clearly connected to a low level, a communication failure does not occur even when the idle voltage is in a floating state.

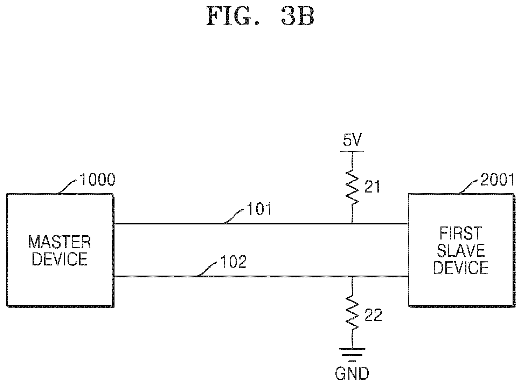

FIG. 3B is a connection diagram illustrating an embodiment where communication lines are connected between a master device and a slave device, fail-safe resistors are connected to only the side of the slave device, according to an embodiment of the disclosure.

Referring to FIG. 3B, unlike FIG. 3A, the pull-up resistor 21 is connected to the first communication line 101 on the side of the first slave device 2001 instead of the master device 1000, and similarly, the pull-down resistor 22 is connected to the second communication line 102 on the side of the first slave device 2001. The pull-up resistor 21 and the pull-down resistor 22 of FIG. 3B are different from those of FIG. 3A in that they are connected to the side of the first slave device 2001, but their actual operation is the same as that of FIG. 3A. In the connection illustrated in FIG. 3B, the pull-up resistor 21 may be connected to a signal power supply on a PCB of the first slave device 2001, and the pull-down resistor 22 may be connected to a signal ground on the PCB of the first slave device 2001. In differential voltage communication according to the connection diagram illustrated in FIG. 3B, when one communication line is clearly connected to a high level and the other communication line is clearly connected to a low level, a communication failure does not occur even when the idle voltage is in a floating state.

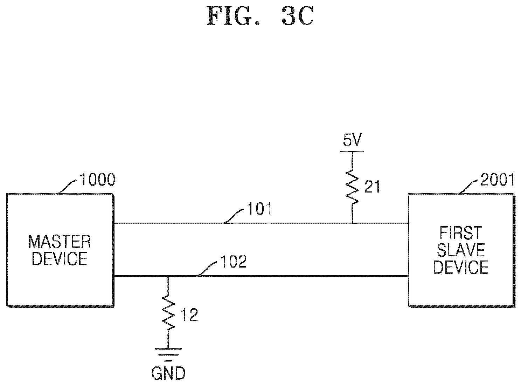

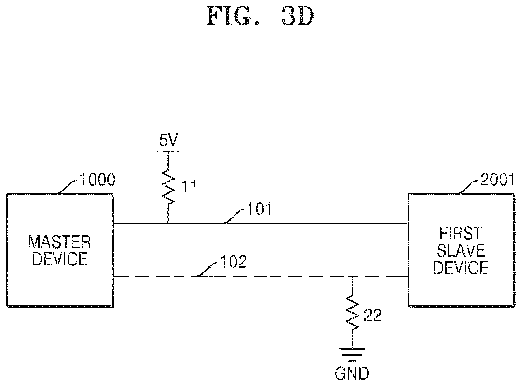

FIGS. 3C and 3D are connection diagrams illustrating an embodiment where communication lines are connected between a master device and a slave device, fail-safe resistors are connected distantly from each other and connected to the respective communication lines, according to an embodiment of the disclosure.

Referring to FIG. 3C, only the pull-down resistor 12 is connected to the second communication line 102 on the side of the master device 1000, and the pull-up resistor 21 is connected to the first communication line 101 on the side of the first slave device 2001. Referring to FIG. 3D, only the pull-up resistor 11 is connected to the first communication line 101 on the side of the master device 1000, and the pull-down resistor 22 is connected to the second communication line 102 on the side of the first slave device 2001. In FIG. 3A or 3B, the pull-up resistor and the pull-down resistor are connected to the respective communication lines on the side of one device. However, the example of FIG. 3C is different from those of FIGS. 3A and 3B in that the pull-up resistor 21 is on the side of the first slave device 2001 and the pull-down resistor 12 is on the side of the master device 1000. The example of FIG. 3D is different from those of FIGS. 3A and 3B in that the pull-up resistor 11 is on the side of the master device 1000 and the pull-down resistor 22 is on the side of the first slave device 2001. A configuration in which the master device 1000 and the first slave device 2001 are insulated from each other may not be helpful in establishing a preset voltage level between the two communication lines. However, a configuration in which the signal power supply and the signal ground of each of the master device 1000 and the first slave device 2001 are not insulated from each other in the connection structure as illustrated in FIG. 3C or 3D may be helpful in clearly establishing the voltage level between the two communication lines.

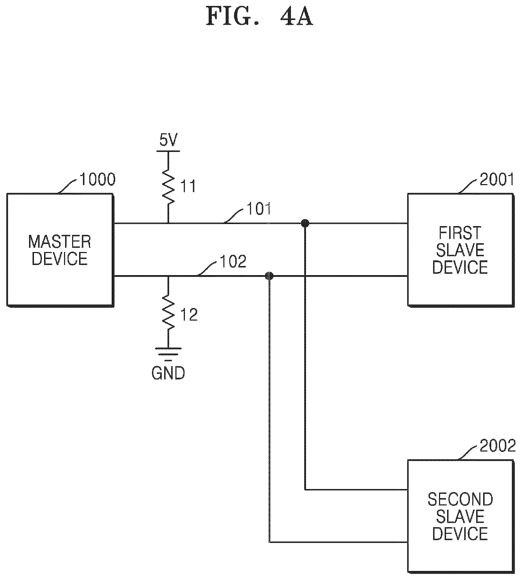

FIG. 4A is a connection diagram illustrating an embodiment where a master device is connected to a plurality of slave devices, fail-safe resistors are connected to the side of the master device, according to an embodiment of the disclosure.

Referring to FIG. 4A, the master device 1000 is connected to two slave devices, which are the first slave device 2001 and a second slave device 2002. Although two slave devices are illustrated in FIG. 4A, the number of slave devices may further increase due to the characteristics of differential voltage communication. An advantage of differential voltage communication is that the master device 1000 may perform multi-drop, and loss of communication data does not occur even when multi-drop is performed. However, in order to prevent loss of communication data, as illustrated in FIG. 4A, it is preferable that the pull-up resistor 11 and the pull-down resistor 12 are connected to the respective communication lines such that the voltage level between the first communication line 101 and the second communication line 102 is clear. In FIG. 4A, the pull-up resistor 11 is connected to the first communication line 101 and the pull-down resistor 12 is connected to the second communication line 102, but because differential voltage communication is used, it does not matter when the pull-down resistor 12 is connected to the first communication line 101 and the pull-up resistor 11 is connected to the second communication line 102. Although there are no pull-up resistors or pull-down resistors connected to the side of the first slave device 2001 or the second slave device 2002, the communication lines on the side of the master device 1000 are connected to the pull-up resistor and the pull-down resistor, respectively, and thus, a communication failure may be prevented by securing a stable differential voltage level without loss of communication data.

In an embodiment of the disclosure, a processor (or a microcomputer) of the master device 1000 may transmit a resistor connection-related command to each slave device such that a pull-up resistor is connected to the first communication line 101 and a pull-down resistor is connected to the second communication line 102 in the connection diagram of FIG. 4A in which a plurality of slave devices are connected to the master device, and the internal components of the master device may perform a control command regarding connection of the pull-up resistor and the pull-down resistor. In an embodiment of the disclosure, because the pull-up resistor 11 and the pull-down resistor 12 are connected to the communication lines on the side of the master device 1000, respectively, in the case of FIG. 4A, the master device may transmit, to each slave device, a command to disconnect the communication lines from the pull-up resistor and the pull-down resistor.

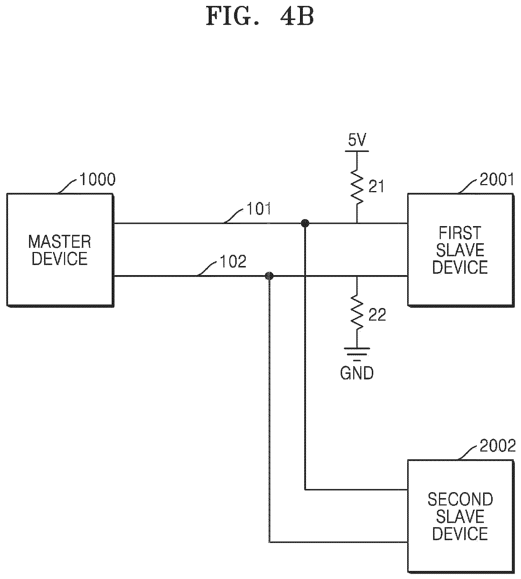

FIG. 4B is a connection diagram illustrating an embodiment where a master device is connected to a plurality of slave devices, fail-safe resistors are connected to the side of the slave device, according to an embodiment of the disclosure.

Referring to FIG. 4B, the master device 1000 is connected to two slave devices, which are the first slave device 2001 and the second slave device 2002, as in FIG. 4A. Although two slave devices are illustrated in FIG. 4B, the number of slave devices may further increase due to the characteristics of differential voltage communication.

In FIG. 4B, the pull-up resistor 21 on the side of the first slave device 2001 is connected to the first communication line 101, and the pull-down resistor 22 on the side of the first slave device 2001 is connected to the second communication line 102. Because differential voltage communication is used, it does not matter when the pull-down resistor 22 is connected to the first communication line 101 and the pull-up resistor 21 is connected to the second communication line 102. Although there are no pull-up resistors or pull-down resistors connected to the side of the master device 1000 or the second slave device 2002, the communication lines on the side of the first slave device 2001 are connected to the pull-up resistor and the pull-down resistor, respectively, and thus, a communication failure may be prevented by securing a stable differential voltage level without loss of communication data.

In an embodiment of the disclosure, the processor (or the microcomputer) of the master device 1000 may transmit a resistor connection-related command to each slave device such that a pull-up resistor is connected to the first communication line 101 and a pull-down resistor is connected to the second communication line 102 in the connection diagram of FIG. 4B in which a plurality of slave devices are connected to the master device. In addition, the processor (or the microcomputer) of the master device 1000 may internally perform a command related to connection or disconnection of the pull-up resistor and the pull-down resistor. In the case of FIG. 4B, the master device may transmit, to the first slave device, a command to connect the pull-up resistor 21 and the pull-down resistor 22 to the communication lines on the side of the first slave device 2001, respectively, and may transmit, to the second slave device 2002, a command to disconnect a pull-up resistor and a pull-down resistor from the communication lines. At the same time, the master device 1000 may perform control such that the communication lines connected to the master device 1000 are disconnected from a pull-up resistor and a pull-down resistor on the side of the master device 1000.

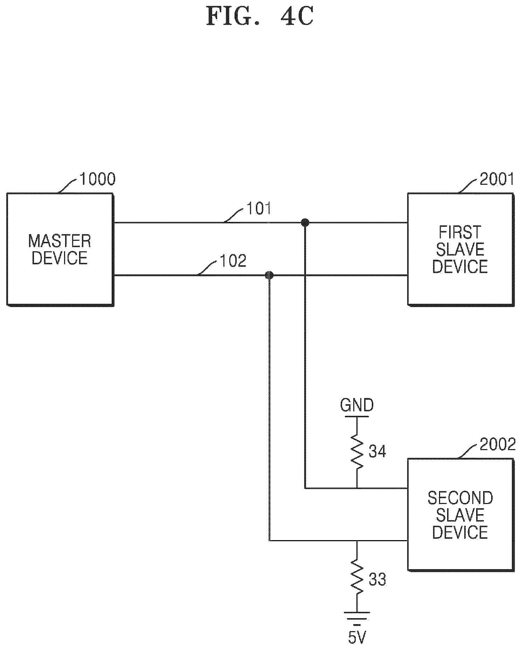

FIG. 4C is a connection diagram illustrating an embodiment where a master device is connected to a plurality of slave devices, fail-safe resistors are connected to the side of the slave device, according to an embodiment of the disclosure.

Referring to FIG. 4C, the master device 1000 is connected to two slave devices, which are the first slave device 2001 and the second slave device 2002, as in FIGS. 4A and 4B. Although two slave devices are illustrated in FIG. 4C, the number of slave devices may further increase due to the characteristics of differential voltage communication.

In FIG. 4C, the pull-down resistor 34 on the side of the second slave device 2002 is connected to the first communication line 101, and the pull-up resistor 33 on the side of the second slave device 2002 is connected to the second communication line 102. Because differential voltage communication is used, it does not matter when the pull-up resistor 33 is connected to the first communication line 101 and the pull-down resistor 34 is connected to the second communication line 102. Although there are no pull-up resistors or pull-down resistors connected to the side of the master device 1000 or the first slave device 2001, the communication lines on the side of the second slave device 2002 are connected to the pull-up resistor and the pull-down resistor, respectively, and thus, a communication failure may be prevented by securing a stable differential voltage level without loss of communication data.

In an embodiment of the disclosure, the processor (or the microcomputer) of the master device 1000 may transmit a resistor connection-related command to each slave device such that a pull-down resistor is connected to the first communication line 101 and a pull-up resistor is connected to the second communication line 102 in the connection diagram of FIG. 4C in which a plurality of slave devices are connected to the master device. In the case of FIG. 4C, the master device may transmit a command to connect the pull-up resistor 33 and the pull-down resistor 34 to the communication lines on the side of the second slave device 2002, respectively, and may transmit, to the first slave device 2001, a command to disconnect a pull-up resistor and a pull-down resistor from the communication lines. At the same time, the master device 1000 may perform control such that the communication lines connected to the master device 1000 are disconnected from a pull-up resistor and a pull-down resistor on the side of the master device 1000.

FIG. 5 is a flowchart illustrating a method of connecting fail-safe resistors to only one communication device and disconnecting fail-safe resistors from the other communication devices, according to an embodiment of the disclosure.

Referring to FIG. 5, in operation S510, when power is first applied, the master device 1000 may be selected from among communication devices connected to each other. Any one of the devices connected to each other through communication lines may be a master device or a slave device.

Here, when each device performs communication through the communication lines, the communication method is based on differential voltage communication and is an RS-485 communication method or a Modbus communication method. When power is first applied to the devices connected to the communication lines, the master device 1000 may perform a tracking operation on the communication devices connected to a network. Tracking refers to an operation of defining relationships between communication devices connected to the same network to configure connections between the communication devices. In order to perform tracking, a master/slave relationship is first defined. The master device 1000 is selected at the beginning of the network connection according to a pre-agreed rule. The selected master device 1000 designates the remaining communication devices participating in the communication as slave devices, and assigns addresses to the slave devices, respectively. When assigning the addresses, the master device 1000 may assign each slave a unique address that does not overlap other addresses such that the slave devices are distinguished from each other.

In an embodiment of the disclosure, a voltage monitoring method may be used as a method of defining the master/slave relationship. All of the devices connected to each other through the communication lines may have voltage values input by microcomputer voltage monitoring ports therein, and the voltage values in different devices may be different from each other. In order to select the master device, at the initial start of communication, each device may share the voltage value monitored by its voltage monitoring port with the other devices through the communication lines, each device connected to the communication lines may compare its own voltage value with the shared voltage values, and the device with the highest value among the monitored voltage values may be declared as the master device. Because each device may receive power from its own external input device or may receive power (a signal power supply) from the master device connected to the communication, the signal power supply and the signal ground of each device may or may not be insulated from each other.

In an embodiment of the disclosure, when determining the master device, a device equipped with a separate switched-mode power supply (SMPS) or adapter may be preferentially selected as the master device. On the contrary, a device receiving power from another device may be preferentially excluded from the selection of the master device. When there are a plurality of devices equipped with their own SMPSs, the device with the highest voltage value among the plurality of devices may be declared as the master device by comparing the monitored voltage values with each other as in the above-described method.

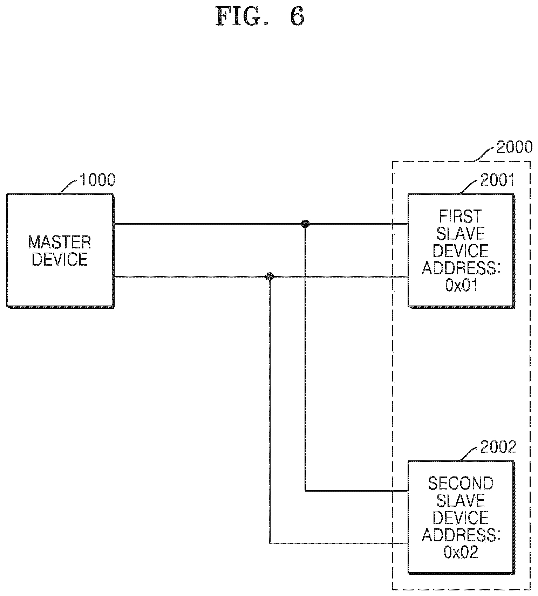

An embodiment of the disclosure in which, after the master device is declared, the master device assigns different addresses to slave devices and receives device information from the slave devices will be described with reference to FIG. 6.

FIG. 6 is a connection diagram illustrating that a master device assigns different addresses to slave devices, according to an embodiment of the disclosure.
When a plurality of slave devices 2000 are provided, the master device 1000 may assign a unique address to each slave device. Referring to FIG. 6, the master device 1000 assigns an address '0x01' to the first slave device 2001 and an address '0x02' to the second slave device 2002. The number of bits of the address may vary depending on the number of slave devices 2000 or the communication method. The master device 1000 may select a desired slave device based on a unique address assigned to each slave device and transmit data to the selected slave device, and may identify which slave device has transmitted data received by the master device 1000. In an embodiment of the disclosure, when the master device is declared according to the definition of the master/slave relationship upon the power being first applied, the master device 1000 having been selected as the master device requests response messages from the plurality of slave devices 2000. The master device 1000 may determine an order of assigning addresses to the plurality of slave devices 2000 according to an order in which response messages are received from the plurality of slave devices 2000. In an embodiment of the disclosure, the master device 1000 may assign an addresses to the plurality of slave devices 2000 based on the monitored voltage values of the plurality of slave devices 2000 that were considered when selecting the master device. For example, when assigning addresses to the plurality of slave devices 2000, the master device 1000 may assign the addresses in descending order of monitored voltage values. In detail, Table 2 shows an example of assigning addresses according to the monitored voltage value of each slave device.

**[Table 2]**

| Device | Monitored voltage value | Assigned address |
|---|---|---|
| Master Device | 12.3V | |
| First Slave Device | 12.1V | 0x01 |
| Second Slave Device | 11.9V | 0x02 |
| ... | ... | ... |
| N-th Slave Device | 11.1V | 0x10 |

According to an embodiment of the disclosure, when the assignment of addresses to the slave devices 2000, the master device 1000 may collect detailed information from the slave devices 2000.

At least one processor included in each slave device 2000 may be assigned a unique address according to the order in which the response messages transmitted to the master device 1000 are received by the master device 1000, and based on the assigned unique address, transmit device information of the slave device 2000 to the master device 1000 through a communication unit included in the slave device 2000, and the device information of the slave device 2000 may include at least one of the unique address, a model name of the slave device 2000, a serial number of the slave device 2000, a database code corresponding to the slave device 2000, or providable-function data of the slave device 2000.

The database code may be assigned by a manufacturer of each device. The microcomputers inside the master device 1000 and the slave devices 2000 may store unique microcomputer programs, and in order to distinguish between microcomputer programs, the manufacturer may assign a particular database code to each microcomputer program. For example, a database code 'DB-0001' may be assigned to the first slave device 2001, and a database code 'DB-0002' may be assigned to the second slave device 2002. Even when the first slave device 2001 and the second slave device 2002 use the same microcomputer program, the slave devices may perform different unique operations depending on which internal microcomputer programs are used by the slave devices. The database code may be a verification code required in installation and service stages of the slave device. An installer or service engineer of the slave device may identify the database code of the slave device to determine whether software or firmware is updated, and upload a microcomputer program when replacing a material, by using the database code.

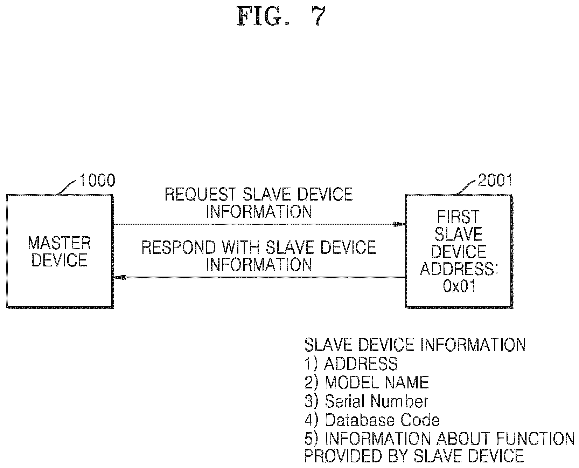

FIG. 7 is a connection diagram illustrating that a master device obtains slave device information from a slave device, according to an embodiment of the disclosure.

Referring to FIG. 7, in an embodiment of the disclosure, a processor (not shown) of the master device 1000 may obtain, from the first slave device 2001, slave device information of the first slave device 2001. In order to obtain the slave device information, the processor of the master device 1000 may transmit a device information request to the first slave device 2001. In response to the received device information request, the first slave device 2001 may transmit the slave device information to the master device 1000. The slave device information may include at least one of an address, a model name, a serial number, a database code, or providable-function data, which is data regarding a function provided by the slave device. The master device 1000 may store the collected slave device information and use it to control the first slave device 2001. In an embodiment of the disclosure, because multi-drop may be performed in differential voltage communication, the processor of the master device 1000 may transmit the device information request to all slave devices 2000 connected to the differential voltage communication lines at once in order to obtain the slave device information from all slave devices 2000. Alternatively, in an embodiment of the disclosure, the processor of the master device 1000 may distinguish between all slave devices 2000 connected to the differential voltage communication lines, and transmit a separate device information request to each slave device 2000.

In an embodiment of the disclosure, referring to FIG. 6, the master device 1000 may obtain, from the first slave device 2001 (with a slave device address '0x01'), the address '0x01', a model name (e.g., '4way'), a serial number, a database code (e.g., 'DB-0001'), and providable-function data 'cleaning function providable'. In addition, the master device 1000 may obtain, from the second slave device 2002 (with a slave device address '0x02'), the address '0x02, a model name (e.g., '1way'), a serial number, a database code (e.g., 'DB-0002'), and providable-function data 'no cleaning function providable'. The master device 1000 may individually control each louver of the first slave device 2001, which is a '4way' device and has the address '0x01', through differential voltage communication, and a service engineer may identify the first slave device 2001 by using the serial number of the first slave device 2001 and remotely utilize the database code 'DB-0001' when replacing necessary materials or accessories through fault diagnosis. In addition, by using the information 'cleaning function providable' obtained from the first slave device 2001, the processor of the master device 1000 may perform control such that guide information or a menu is provided to a display device (not shown) capable of displaying information, such as a remote controller used by a user, so as to provide a cleaning function.

Referring back to FIG. 5, in operation 520, after the tracking is completed, the processor of the master device 1000 on the network in which the master/slave relationship is established executes the microcomputer program to identify the voltage level between ends of the communication lines through a voltage sensor. When the identified voltage level is greater than or equal to a particular voltage (a preset voltage, e.g., 0.2 V), the processor performs communication between the two communication devices without taking any particular action. When the identified voltage level is less than the particular voltage (a preset voltage, e.g., 0.2 V), the processor of the master device 1000 may perform connection of fail-safe resistors. Identification of the voltage level may be performed by a voltage sensor such as a divider resistor circuit as illustrated in FIG. 2.

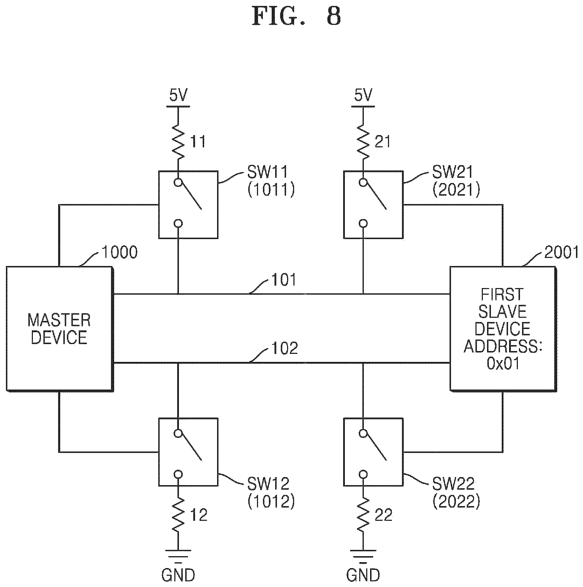

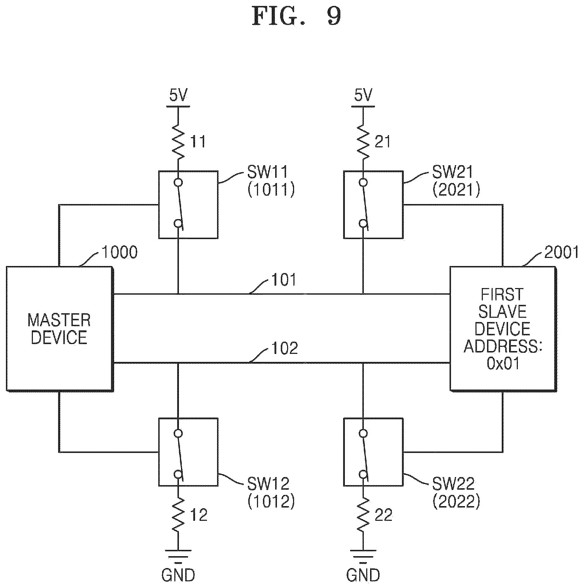

Hereinafter, connection of fail-safe resistors will be described in detail with reference to FIGS. 8 and 9.

FIG. 8 is a connection diagram illustrating that communication lines are disconnected from fail-safe resistors by switches, according to an embodiment of the disclosure.

Referring to FIG. 8, the first communication line 101 and the second communication line 102 connecting the master device 1000 to the first slave device 2001 are connected to switches 1011 and 2021 that may be connected to pull-up resistors 11 and 21, and switches 1012 and 2022 that may be connected to pull-down resistors 12 and 22, respectively. Referring to FIG. 8, because no switches are turned on, no communication lines connected to the respective communication devices are connected to the pull-up resistors or the pull-down resistors.

FIG. 9 is a connection diagram illustrating that communication lines are connected to fail-safe resistors by switches, according to an embodiment of the disclosure.

FIG. 9 is a circuit diagram illustrating that communication lines are connected to fail-safe resistors by switches, according to an embodiment of the disclosure. Unlike FIG. 8, in FIG. 9, two communication lines, which are the first communication line 101 and the second communication line 102, on the side of the master device 1000 and the side of the first slave device 2001 are connected to pull-up resistors 11 and 21 and pull-down resistors 12 and 22.

In either of the states illustrated in FIGS. 8 and 9, the processor of the master device 1000 may identify the voltage level between one ends of the two communication lines through a voltage sensor, and when the voltage level is greater than or equal to a particular voltage (e.g., a preset voltage), perform communication between the two communication devices without taking any particular action.

Referring back to FIG. 5, in operation S520, the processor of the master device 1000 identifies the voltage level between ends of the communication lines. When the identified voltage level is less than a particular voltage (a preset voltage, e.g., 0.2 V) set by the microcomputer program, the processor of the master device 1000 determines that a network communication failure may occur. Accordingly, the processor of the master device 1000 executes the microcomputer program to control the switches connected to the pull-up resistors and the pull-down resistors to be connected to the communication lines for fail-safe resistor connection, such that, as shown in operation S530, the pull-up resistor is connected to one communication line on the side of the master device 1000, and the pull-down resistor is connected to the other communication line on the side of the master device 1000. In addition, the processor of the master device 1000 may transmit, to the other slave devices, a command to disconnect the pull-up resistors and the pull-down resistors from the communication lines on the sides of the other slave devices.

In other words, the processor of the master device 1000 performs the microcomputer program to turn on two switches (e.g., 1011 and 1012 in FIG. 9) on the side of any one device (e.g., the master device) such that the pull-up resistor and the pull-down resistor are connected to the two communication lines, respectively. In addition, the processor may simultaneously or sequentially transmit, to the other slave devices 2000, a command to turn off all of the switches on the sides of the other slave devices 2000 such that the pull-up resistors and the pull-down resistors are disconnected from the two communication lines on the sides of the other slave devices 2000 by turning off the switches. In this manner, the master device 1000 and the slave devices 2000, which are connected to each other through the two communication lines for differential voltage communication are in a structure in which only one pull-up resistor is connected to one communication line and only one pull-down resistor is connected to the other communication line. Accordingly, the voltage level between the two communication lines may be kept stable.

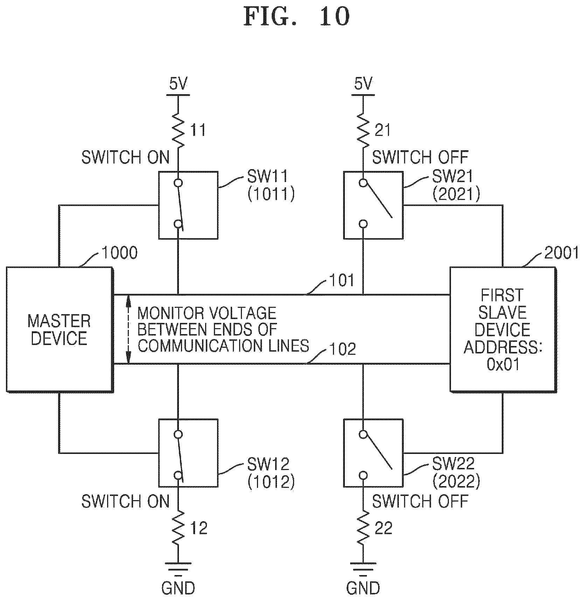

FIG. 10 is a connection diagram in which a pull-up resistor and a pull-down resistor are connected to two communication lines, respectively, according to a voltage level between ends of the communication lines, according to an embodiment of the disclosure.

In an embodiment of the disclosure, according to the microcomputer program, the processor of the master device 1000 may transmit, to the slave devices 2000, a command to disconnect the pull-up resistors and the pull-down resistors from the two communication lines. The microcomputer programs of the slave devices 2000 having received the command turn off the switches connected to the pull-up resistors and the pull-down resistors to disconnect the pull-up resistors and the pull-down resistors from the communication lines. The same result may be obtained even when the switches are not between the communication lines and the resistors, but between the resistors and the signal power supply or the signal ground. In an embodiment of the disclosure, according to the microcomputer program of the master device 1000, the processor of the master device 1000 may turn on a switch SW11 (1011) to connect the pull-up resistor 11 to the first communication line 101, and turn on a switch SW12 (1012) to connect the pull-down resistor 12 to the second communication line 102, such that the resistors are connected to the communication lines only on the side of the master device 1000. In an embodiment of the disclosure, the processor of the master device 1000 may transmit a switch 'on' control command such that the switch SW11 (1011) and the SW12 (1012) on the side of the master device 1000 are turned off and the pull-up resistor and the pull-down resistor on the side of any one slave device are connected to the two communication lines, respectively. For example, in FIG. 10, the switch SW11 (1011) and the switch SW12 (1012) may be turned off under control of the processor of the master device 1000, and a processor (not shown) of the first slave device 2001 may turn on a switch SW21 (2021) and a switch SW22 (2022) according to the command received from the master device 1000.

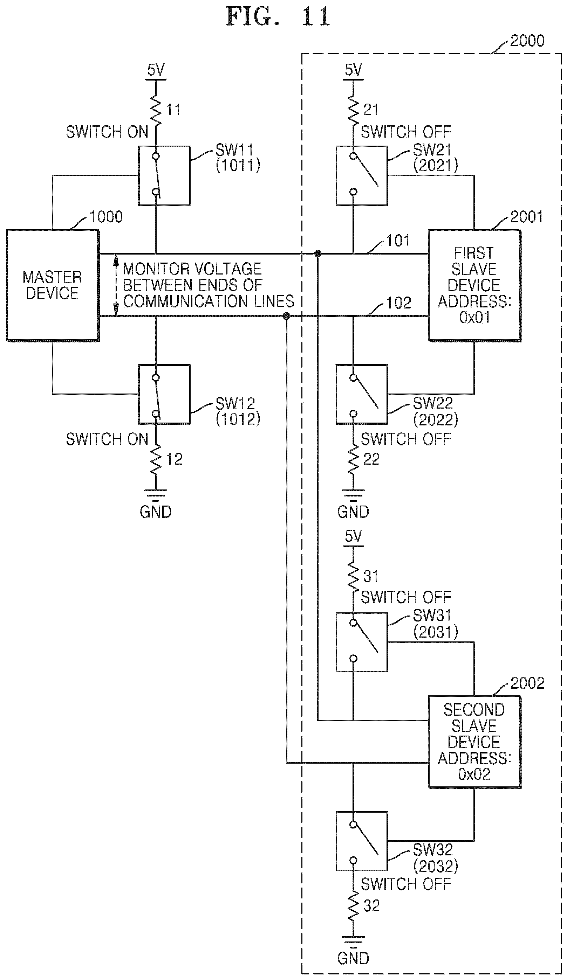

FIG. 11 is a connection diagram in which only a pull-up resistor and a pull-down resistor are connected to two communication lines on the side of a master device, respectively, according to a voltage level between ends of the communication lines, according to an embodiment of the disclosure.

Referring to FIG. 11, in an embodiment of the disclosure, the master device 1000 and a plurality of slave devices 2000 are connected to each other through communication lines. Although two slave devices 2000 are illustrated in FIG. 11, the following operations may be equally applied to a case in which three or more slave devices 2000 are provided.

In an embodiment of the disclosure, the processor of the master device 1000 may control the switch SW11 (1011) and the switch SW12 (1012) to connect the pull-up resistor 11 and the pull-down resistor 12 on the side of the master device 1000 to the two communication lines, and transmit, to the slave devices 2000, a command to turn off all switches, i.e., SW21 (2021), SW22 (2022), SW31 (2031), and SW32 (2032). In an embodiment of the disclosure, the processor of the master device 1000 may control the switches SW11 (1011) and SW12 (1012) to disconnect the pull-up resistor 11 and the pull-down resistor 12 on the side of the master device 1000 from the two communication lines, transmit, to any one slave device 2000, a command to turn on the pull-up resistor connection switch SW21 (2021) or SW31 (2031) or the pull-down resistor connection switch SW22 (2022) or SW32 (2032), and transmit, to the other slave device 2000, a command to turn off the pull-up resistor connection switch SW21 (2021) or SW31 (2031) or the pull-down resistor connection switch SW22 (2022) or SW32 (2032).

According to an embodiment of the disclosure, the processor of the master device 1000 or the slave device 2000 may turn on (connect) or off (disconnect) the switches connecting the pull-up resistors and the pull-down resistors to the two communication lines, through the microcomputer program. Thus, according to an embodiment of the disclosure, each of the master device 1000 and the slave devices 2000 may be equipped with the switches for controlling connection between the pull-up resistor and the pull-down resistor and the two communication lines, and may have the microcomputer program. In this manner, a fail-safe configuration according to the disclosure is possible by using the method according to the disclosure even in a case in which the manufacturers of communication devices are different from each other.

According to an embodiment of the disclosure, when a plurality of slave devices 2000 are connected to the master device 1000, a slave device connected in reverse polarity to the master device 1000 may be regarded as not existing on the network during the tracking operation, and thus excluded from control targets and/or communication targets of the master device 1000. The method of excluding a slave device connected in reverse polarity to a master device from control targets and/or communication targets is described in detail above with reference to FIG. 2, and thus, redundant descriptions will be omitted.

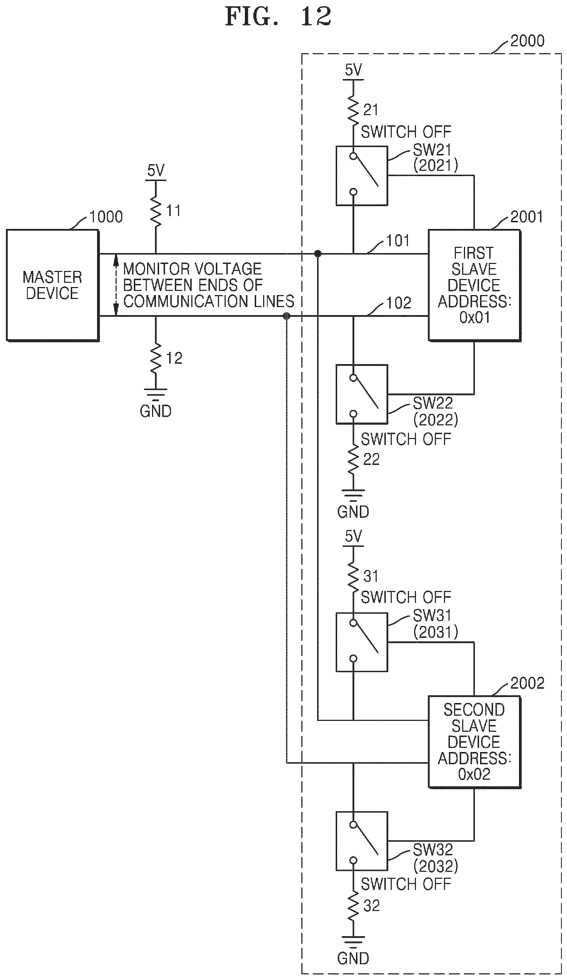

FIG. 12 is a connection diagram in which a pull-up resistor and a pull-down resistor on the side of a master device are connected to two communication lines, respectively, according to an embodiment of the disclosure.

There may be a case in which connection between two communication lines for differential voltage communication and a pull-up resistor and a pull-down resistor may be controlled by switches, but there may also be a case in which at least one of a pull-up resistor or a pull-down resistor is fixedly connected to two communication lines. FIG. 12 illustrates a case in which the pull-up resistor 11 on the side of the master device 1000 is fixedly connected to the first communication line 101 and the pull-down resistor 12 on the side of the master device 1000 is fixedly connected to the second communication line 102.

In this case, the processor of the master device 1000 performs disconnection control, when possible, such that pull-up resistors and pull-down resistors on the sides of slave devices 2000 are disconnected from the communication lines. In an embodiment of the disclosure, the processor of the master device 1000 detects that the pull-up resistor 11 and the pull-down resistor 12 on the side of the master device 1000 are fixedly connected to the two communication lines. Accordingly, the processor of the master device 1000 may transmit, to the slave devices 2000, a command to disconnect pull-up resistors and pull-down resistors from the two communication lines. In an embodiment of the disclosure, the processors of the slave devices 2000 having received the command may perform control such that the switches SW21 (2021) and SW31 (2031) connected to the pull-up resistors 21 and 31 on the sides of the slave device 2000s and any one communication line, and the switches SW22 (2022) and SW32 (2032) connected to the pull-down resistors 22 and 32 and the other communication line are turned off. Through this operation, control may be performed such that only one pull-up resistor and only one pull-down resistor are connected to the communication lines between the slave devices 2000 connected to the master device 1000.

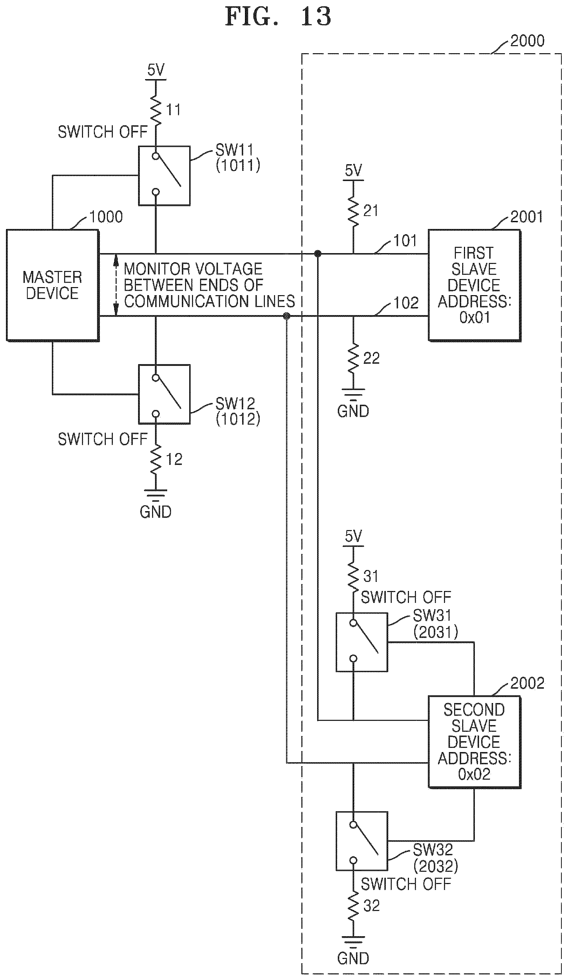

FIG. 13 is a connection diagram in which a pull-up resistor and a pull-down resistor on the side of a slave device are connected to two communication lines, respectively, according to an embodiment of the disclosure.

FIG. 13 is a connection diagram in which a pull-up resistor 21 and a pull-down resistor 22 on the side of any one slave device 2001 are fixedly connected to two communication lines, respectively, according to an embodiment of the disclosure. In this case, the processor of the master device 1000 detects that the pull-up resistor 11 and the pull-down resistor 22 on the side of the slave device 20010 are connected to the communication lines, respectively. For example, the master device 1000 may receive, from the first slave device 2001, information that the pull-up resistor 21 and the pull-down resistor 22 on the side of the first slave device 2001 are fixedly connected to the two communication lines, respectively. Based on the received information, the processor of the master device 1000 may control the switches SW11 (1011) and SW12 (1012) to be turned off such that the pull-up resistor 11 and the pull-down resistor 12 on the side of the master device 1000 are disconnected from the two communication lines. In addition, the processor of the master device 1000 may transmit, to the second slave device 2002, a command to disconnect the pull-up resistor 31 and the pull-down resistor 32 from the two communication lines. When another slave device is connected to the two communication lines, the processor of the master device 1000 may transmit, to all of the slave devices 2000 connected to the master device 1000, a command to disconnect pull-up resistors and pull-down resistors from the two communication lines. The processors of the slave devices 2000 having received the command may perform control such that the switches connected to the pull-up resistors on the sides of the slave device 2000s and any one communication line, and the switches connected to the pull-down resistors and the other communication line are turned off. By this operation, control may be performed such that only one pull-up resistor is connected to any one communication line and only one pull-down resistor is connected to the other communication line, between the master device 1000 and the slave devices 2000 connected thereto.

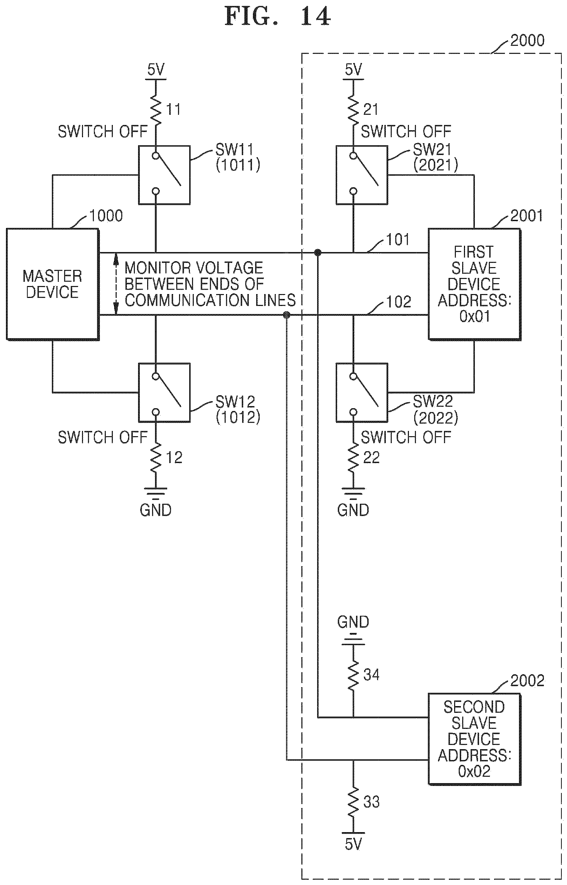

FIG. 14 is a connection diagram in which a fixed pull-up resistor and pull-down resistor on the side of a slave device are connected in reverse polarity to two communication lines, respectively, according to an embodiment of the disclosure.

In this case, the processor of the master device 1000 detects that the pull-up resistor 33 and the pull-down resistor 34 on the side of the slave device 2002 are connected to the two communication lines, respectively. For example, the master device 1000 may receive, from the second slave device 2002, information that the pull-up resistor 33 and the pull-down resistor 34 on the side of the second slave device 2002 are fixedly connected to the two communication lines, respectively. Based on the received information, the processor of the master device 1000 may control the switches SW11 (1011) and SW12 (1012) to be turned off such that the pull-up resistor 11 and the pull-down resistor 12 on the side of the master device 1000 are disconnected from the two communication lines. In addition, the processor of the master device 1000 may transmit, to the first slave device 2001, a command to disconnect the pull-up resistor and the pull-down resistor from the two communication lines. When another slave device is connected to the two communication lines, the processor of the master device 1000 may transmit, to all of the slave devices 2000 connected to the master device 1000, a command to disconnect pull-up resistors and pull-down resistors from the two communication lines. The processors of the slave devices 2000 having received the command may perform control such that the switches connected to the pull-up resistors on the sides of the slave device 2000s and any one communication line, and the switches connected to the pull-down resistors and the other communication line are turned off. Through this operation, control may be performed such that only one pull-up resistor and only one pull-down resistor are connected to the two communication lines between the slave devices 2000 connected to the master device 1000.

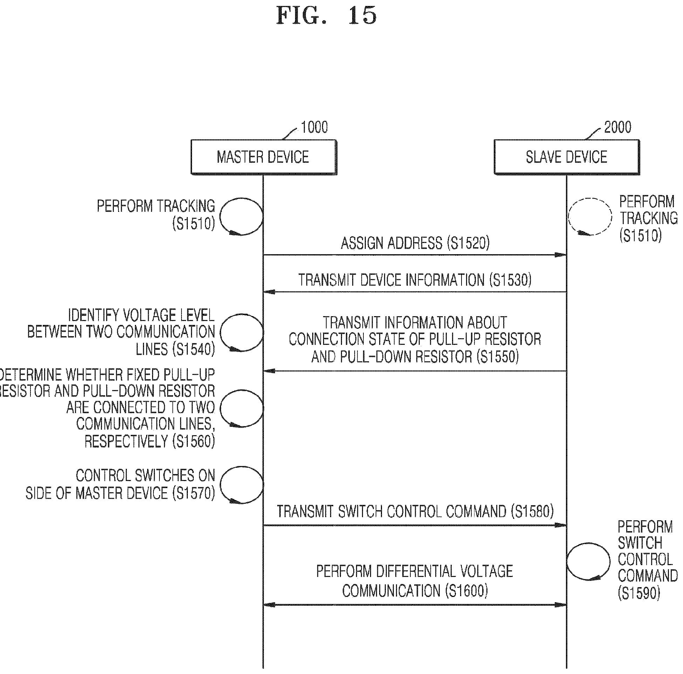

FIG. 15 is a sequence diagram illustrating a process of connecting fail-safe resistors in differential voltage communication, according to an embodiment of the disclosure.

Referring to FIG. 15, the master device 1000 connects fail-safe resistors to two communication lines in order to perform differential voltage communication with the slave devices 2000, and most operations of the master device 1000 may be performed by a processor of the master device 1000, and most operations of the slave device 2000 may be performed by the processor of the slave device 2000. The slave devices 2000 may include a plurality of slave devices.

First, in operation S1510, a tracking operation is performed on devices connected to the communication lines, and the master device 1000 and the slave devices 2000 are determined from among the devices according to an agreed rule. Because the tracking is performed not only on the master device 1000 but also on all devices connected to the communication lines, it may be seen that the tracking is also performed on the slave devices 2000.

In operation S1520, in a case in which a plurality of slave devices 2000 are provided, the processor of the master device 1000 assigns an address to each slave device.

In operation S1530, the slave device 2000 may transmit device information to the master device 1000 based on the assigned address. All of the slave devices 2000 to which the addresses are assigned may transmit the device information to the master device 1000, or only some of the slave devices 2000 may transmit the device information to the master device 1000. The device information of each slave device 2000 may include at least one of the address assigned to the slave device 2000, a model name of the slave device 2000, a serial number of the slave device 2000, a database code corresponding to the slave device 2000, or providable-function data of the slave device 2000. The processor of the master device 1000 may control each slave device 2000 based on the received device information of the slave device 2000. In an embodiment of the disclosure, the processor of the master device 1000 may perform fault diagnosis of each slave device 2000 based on the database code corresponding to the slave device 2000.

Next, in operation S1540, the processor of the master device 1000 may identify the voltage level between the two communication lines for performing differential voltage communication, through a voltage sensor. When the voltage level between the two communication lines is greater than or equal to a preset voltage level, the master device 1000 performs differential voltage communication with the slave devices 2000 without taking any particular action. When the voltage level between the two communication lines is less than the preset voltage level, the process or the master device 1000 initiates an action of connecting one pull-up resistor and one pull-down resistor to the two communication lines, respectively.

In operation S1550, the master device 1000 may optionally receive, from each slave device 2000, information about a connection state of a pull-up resistor and a pull-down resistor of the slave device 2000. In addition, in operation S1560, the processor of the master device 1000 may optionally determine whether a pull-up resistor and a pull-down resistor are respectively connected to the two communication lines used for differential voltage communication. Here, the processor of the master device 1000 may optionally determine whether the pull-up resistor and the pull-down resistor are fixedly connected to the two communication lines used for differential voltage communication, and which slave device has a pull-up resistor and a pull-down resistor that are connected in reverse polarity to the master device 1000. Based on determining that a pull-up resistor and a pull-down resistor on the side of a certain slave device are connected in reverse polarity to the master device 1000, the processor of the master device 1000 may exclude the slave device from control targets or communication targets.

In operation S1570, the processor of the master device 1000 may perform switch control such that only one pull-up resistor and only one pull-down resistor are respectively connected to each of the two communication lines shared by the slave devices 2000 connected to the master device 1000, and in operation S1580, may transmit a command to control switches, to the slave devices 2000. Next, in operation S1590, the slave device 2000 having received the switch control command from the master device 1000 may control opening and closing of the switches of the slave device, based on the received switch control command. According to such an action taken by the processor of the master device 1000, only one pull-up resistor and only one pull-down resistor are respectively connected to each of the two communication lines for differential voltage communication through which the master device 1000 and the slave devices 2000 are connected to each other. In addition, in operation S1600, the master device 1000 and the slave devices 2000 perform differential voltage communication in a state in which only one pull-up resistor and only one pull-down resistor are respectively connected to each the two communication lines for differential voltage communication.

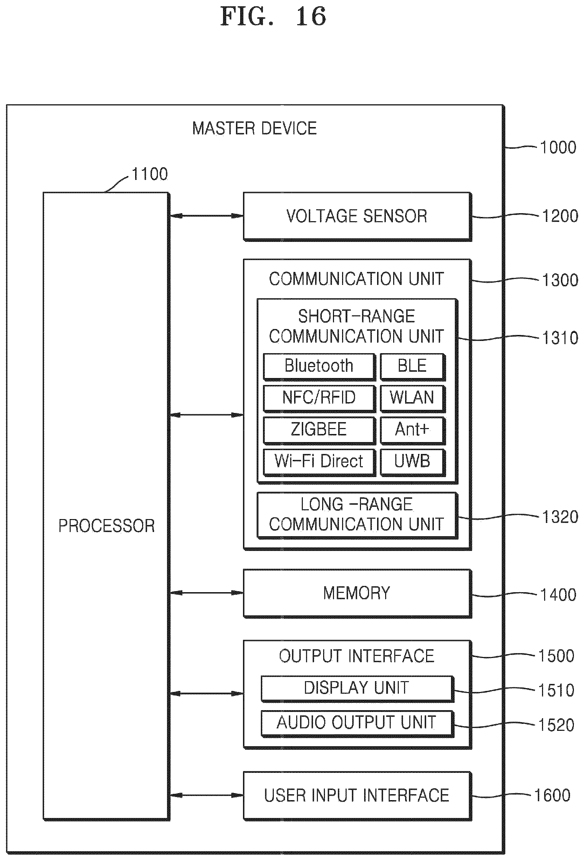

FIG. 16 is a block diagram of a master device capable of performing differential voltage communication, according to an embodiment of the disclosure.

According to an embodiment of the disclosure, the master device 1000 according to the block diagram of FIG. 16 may include a processor 1100, a voltage sensor 1200, a communication unit 1300, a memory 1400, an output interface 1500, and a user input interface 1600. All of the components of the master device 1000 are not essential, and each component may be omitted or an additional component may be added according to the design by the manufacturer.

The master device according to the invention includes at least the features of claim 11. Preferred embodiments of the master device according to the invention are defined in the dependent claims 12-15.

Hereinafter, each component included in the master device 1000 will be described.

The processor 1100 controls the overall operation of the master device 1000. The processor 1100 may execute programs stored in the memory 1400 to control the voltage sensor 1200, the communication unit 1300, the memory 1400, the output interface 1500, and the user input interface 1600. In the disclosure, the processor 1100 may be in charge of overall control of the master device 1000 of FIGS. 1 to 15.

According to an embodiment of the disclosure, the processor 1100 may include an artificial intelligence (AI) processor. The AI processor may be manufactured in the form of a dedicated hardware chip for AI, or may be manufactured as part of an existing general-purpose processor (e.g., a central processing unit (CPU) or an application processor) or a dedicated graphics processor (e.g., a graphics processing unit (GPU)), and mounted on the processor 1100. The processor 1100 may include a communication interface to operate on an Internet of Things (IoT) network or a home network as needed.

The voltage sensor 1200 may be used to measure the voltage level between two communication lines connected to the master device 1000 for performing differential voltage communication. The voltage sensor 1200 may be mainly used to measure a voltage at a signal level.

The communication unit 1300 may include a short-range communication unit 1310 and a long-range communication unit 1320. The short-range wireless communication unit 1310 may include, but is not limited to, a Bluetooth communication unit, a Bluetooth Low Energy (BLE) communication unit, a near-field communication unit, a wireless local area network (WLAN) (e.g., Wi-Fi) communication unit, a Zigbee communication unit, an Infrared Data Association (IrDA) communication unit, a Wi-Fi Direct (WFD) communication unit, an ultra-wideband (UWB) communication unit, an Ant+ communication unit, etc. The long-range communication unit 1320 may transmit and receive radio signals to and from at least one of a base station, an external terminal, or a server, over a mobile communication network. Here, the radio signals may include a voice call signal, a video call signal, or various types of data according to text/multimedia message transmission and reception. The long-range communication unit 1320 may include, but is not limited to, a 3^{rd} Generation (3G) module, a 4^{th} Generation (4G) module, a 5^{th} Generation (5G) module, a Long-Term Evolution (LTE) module, a narrowband IoT (NB-IoT) module, an LTE for Machines (LTE-M) module, etc.

According to an embodiment of the disclosure, through the communication unit 1300, the master device 1000 may communicate with and transmit and receive data to and from external servers, other electrical devices, or the slave devices 2000.

The memory 1400 may store programs for the processor 1100 to perform processing and control, and input/output data (e.g., device information of the master device 1000, a state of communication with slave devices, the number of slave devices connected to the master device 1000, a connection state, etc.). The memory 1400 may store an AI model.

The memory 1400 may include at least one of a flash memory-type storage medium, a hard disk-type storage medium, a multimedia card micro-type storage medium, card-type memory (e.g., SD or XD memory), random-access memory (RAM), static RAM (SRAM), read-only memory (ROM), electrically erasable programmable ROM (EEPROM), programmable ROM (PROM), magnetic memory, a magnetic disc, or an optical disc. In addition, the master device 1000 may operate a web storage or a cloud server that performs a storage function on the Internet.

The output interface 1500 is for outputting an audio signal or a video signal, and may include a display unit 1510, an audio output unit 1520, etc.

According to an embodiment of the disclosure, the master device 1000 may display information related to the master device 1000 and/or communication-related information through the display unit 1510. For example, the master device 1000 may display, on the display unit 1510, an address of the master device 1000, a state of communication connection between the master device 1000 and the slave devices 2000, the number of slave devices 2000 connected to the master device 1000, the voltage level between two communication lines connected to the slave devices 2000, etc.

In a case in which the display unit 1510 and a touch pad form a layer structure and thus constitute a touch screen, the display unit 1510 may also be used as an input device in addition to being used as an output device. The display unit 1510 may include at least one of a liquid-crystal display, a thin-film-transistor liquid-crystal display, a light-emitting diode (LED) display, an organic LED display, a flexible display, a three-dimensional (3D) display, or an electrophoretic display.

The audio output unit 1520 may output audio data received from the communication unit 1300 or stored in the memory 1400. In addition, the audio output unit 1520 may output an audio signal related to a function performed by the master device 1000. The audio output unit 1520 may include a speaker, a buzzer, etc.

The user input interface 1600 is for receiving an input from a user. The user input interface 1600 may be, but is not limited to, at least one of a key pad, a dome switch, a touch pad (e.g., a touch-type capacitive touch pad, a pressure-type resistive overlay touch pad, an infrared sensor-type touch pad, a surface acoustic wave conduction touch pad, an integration-type tension measurement touch pad, a piezoelectric effect-type touch pad), a jog wheel, or a jog switch.

The user input interface 1600 may include a speech recognition module. For example, the master device 1000 may receive, through a microphone, a voice signal, which is an analog signal, and convert a speech part into a computer-readable text by using an automatic speech recognition (ASR) model. The master device 1000 may interpret the text by using a natural language understanding (NLU) model to obtain an utterance intention of the user. Here, the ASR model or the NLU model may be an AI model. The AI model may be processed by an AI-dedicated processor designed in a hardware structure specialized for processing an AI model. The AI model may be generated via a training process. Here, being generated via a training process may mean that predefined operation rules or AI model set to perform desired characteristics (or purposes), is generated by training a basic AI model by using a learning algorithm that utilizes a large amount of training data. The AI model may include a plurality of neural network layers. Each of the neural network layers has a plurality of weight values, and performs a neural network arithmetic operation via an arithmetic operation between an arithmetic operation result of a previous layer and the plurality of weight values.

Linguistic understanding is a technology for recognizing and applying/processing human language/characters, and includes natural language processing, machine translation, dialogue system, question answering, speech recognition/synthesis, and the like.

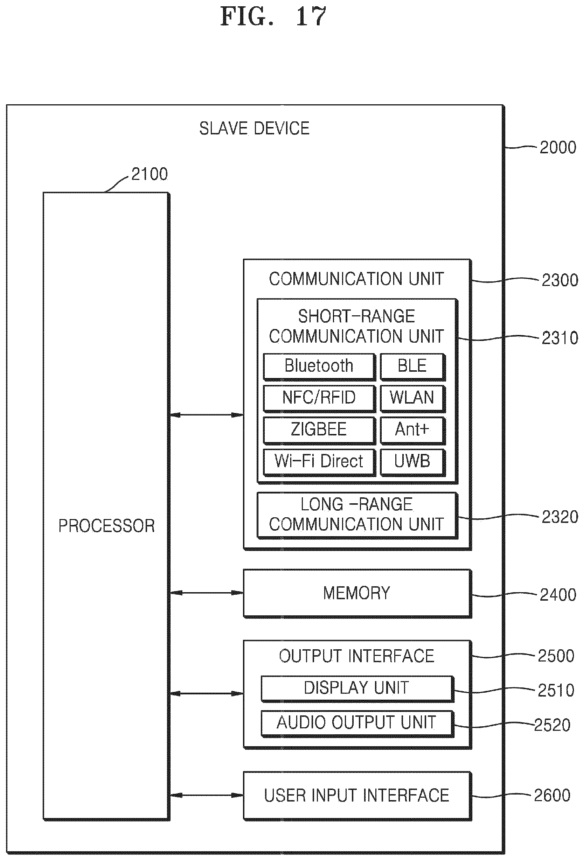

FIG. 17 is a block diagram of a slave device capable of performing differential voltage communication, according to an embodiment of the disclosure.

According to an embodiment of the disclosure, the slave device 2000 according to the block diagram of FIG. 17 may include a processor 2200, a communication unit 2300, a memory 2400, an output interface 2500, and a user input interface 2600. All of the components of the slave device 2000 are not essential, and each component may be omitted or an additional component may be added according to the design by the manufacturer. The components of the slave device 2000 corresponds to the respective components of the master device 1000, and thus, redundant descriptions will be omitted.

Hereinafter, each of the components will be described.

The processor 2200 controls the overall operation of the slave device 2000. The processor 2200 may execute programs stored in the memory 2400 to control the communication unit 2300, the memory 2400, the output interface 2500, and the user input interface 2600. In the disclosure, the processor 2200 may be in charge of overall control of the slave device 2000 of FIGS. 1 to 15. The processor 2200 may transmit, to the master device 1000, device information of the slave device 2000 based on address information, in response to a request by the master device 1000.

Functions of the communication unit 2300, the memory 2400, the output interface 2500, and the user input interface 2600 of the slave device 2000 are the same as or almost similar to functions of the communication unit 1300, the memory 1400, the output interface 1500, and the user input interface 1600 of the master device 1000, and thus, redundant descriptions will be omitted.

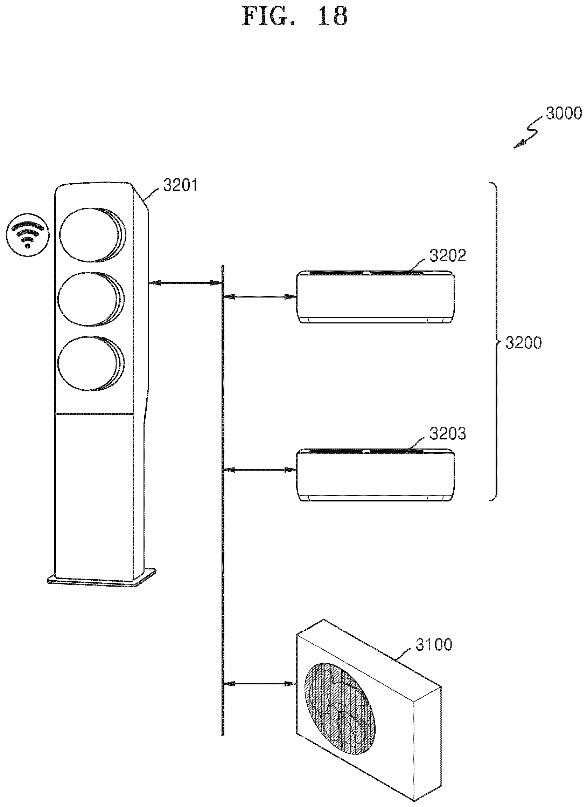

FIG. 18 is a diagram illustrating a configuration of a master device and slave devices in an air conditioner device, according to an embodiment of the disclosure.

According to an embodiment of the disclosure, the master device 1000 and the slave device 2000 may be applied to an air conditioner device 3000.

The air conditioner device according to the invention includes at least the features of claim 1. Preferred embodiments of the air conditioner device according to the invention are defined in the dependent claims 2-10.

Referring to FIG. 18, the air conditioner device 3000 may include an outdoor unit 3100 and a plurality of indoor units 3200 (3201, 3202, 3203, **...). A** plurality of outdoor units 3100 may be provided, but FIG. 18 illustrates that one outdoor unit 3100 is used for all of the plurality of indoor units 3200, for convenience of description.

According to an embodiment of the disclosure, the outdoor unit 3100 may operate as the master device 1000 and the plurality of indoor units 3200 may operate as the slave devices 2000. In this case, when the manufacturer of the outdoor unit 3100 is different from the manufacturers of at least some of the indoor units 3200, and thus, a pull-up resistor and a pull-down resistor are not properly connected to communication lines, the outdoor unit 3100 as the master device 1000 may perform switch control to perform differential voltage communication with the plurality of indoor units 3200 as the slave devices 2000 by using the method of the disclosure according to FIGS. 11 to 15, and transmit, to the slave devices 2000, a switch control command to control switches connected to pull-up resistors and pull-down resistors on the side of the slave devices 2000. In this manner, a stable connection may be achieved when connecting the outdoor unit 3100 to an indoor unit by a different manufacturer, for example, the indoor unit 3201, for differential voltage communication.

In an embodiment of the disclosure, the master device 1000 may be any one indoor unit, for example, the indoor unit 3202, instead of the outdoor unit 3100. As described above, by using the method of the disclosure according to FIGS. 11 to 15, the indoor units 3101 and 3203 other than the outdoor unit 3100 as the slave device 2000 and the indoor unit 3202 as the master device 1000 may perform differential voltage communication with the indoor unit 3202 as the master device 1000. As described above, even in a case in which the manufacturer of the indoor unit 3202 is different from the manufacturer of at least one of the indoor units 3101 and 3203 or the outdoor unit 3100, by using the method of the disclosure according to FIGS. 11 to 15, the indoor unit 3202 as the master device 1000 may control switches or transmit a switch control command, such that a pull-up resistor and a pull-down resistor are connected in normal polarity to the two communication lines 101 and 102, respectively, and thus, stable differential voltage communication is performed.

An air conditioner device according to an embodiment of the disclosure includes a first communication line and a second communication line that are connected to a first slave device for communication with the first slave device through a voltage difference between ends of the first communication line and the second communication line, a voltage sensor configured to sense a voltage between the ends of the first communication line and the second communication line, and a master device including at least one processor configured to, based on the sensed voltage being less than or equal to a preset voltage, transmit a command to perform connection control such that one of a first resistor on the side of the master device that is connectable to the first communication line and a third resistor on the side of the first slave device that is connectable to the first communication line serves as a pull-up resistor, and to perform connection control such that one of a second resistor on the side of the master device that is connectable to the second communication line and a fourth resistor on the side of the first slave device that is connectable to the second communication line serves as a pull-down resistor.

According to an embodiment of the disclosure, the master device is an outdoor unit of the air conditioner device.

According to an embodiment of the disclosure, the transmitting, by the at least one processor, of the command to perform the connection control includes transmitting the command to the first slave device that is an indoor unit of the air conditioner device.

According to an embodiment of the disclosure, the master device is an indoor unit of the air conditioner device.

According to an embodiment of the disclosure, the transmitting, by the at least one processor, of the command to perform the connection control includes transmitting the command to another indoor unit of the air conditioner device or to the first slave device that is an outdoor unit of the air conditioner device.

According to an embodiment of the disclosure, the performing of the connection control such that the one of the first resistor on the side of the master device that is connectable to the first communication line and the third resistor on the side of the first slave device that is connectable to the first communication line serves as the pull-up resistor includes turning on at least one of a first switch connected to each of the first resistor on the side of the master device, which is connected to a first signal power supply, and the first communication line, or a second switch connected to each of the third resistor on the side of the first slave device, which is connected to a second signal power supply, and the first communication line, and the performing of the connection control such that the one of the second resistor on the side of the master device that is connectable to the second communication line and the fourth resistor on the side of the first slave device that is connectable to the second communication line serves as the pull-down resistor includes turning on at least one of a third switch connected to each of the second resistor on the side of the master device, which is connected to a first signal ground, and the second communication line, or a fourth switch connected to each of the fourth resistor on the side of the first slave device, which is connected to a second signal ground, and the second communication line.

According to an embodiment of the disclosure, the first communication line and the second communication line are connected to a second slave device, and the at least one processor is further configured to, based on the voltage sensed by the voltage sensor being less than or equal to the preset voltage, transmit a command to turn off a fifth switch connected to each of the first communication line on the side of the second slave device connected to the second slave device, and a fifth resistor, and a sixth switch connected to each of the second communication line on the side of the second slave device and a sixth resistor.

According to an embodiment of the disclosure, the at least one processor is further configured to exclude the slave device having the resistors connected in reverse polarity to the first communication line and the second communication line, respectively, among the first slave device and the second slave device, from control targets or communication targets.

According to an embodiment of the disclosure, the at least one processor is further configured to transmit, to the slave device having the resistors connected in reverse polarity to the first communication line and the second communication line, respectively, among the first slave device and the second slave device, a command to turn off the second switch between the first communication line and the third resistor or the fifth switch between the first communication line and the fifth resistor, and the fourth switch between the second communication line and the fourth resistor or the sixth switch between the second communication line and the sixth resistor.

According to an embodiment of the disclosure, the communication through the first communication line and the second communication line is RS-485 communication or Modbus communication.

A master device for performing differential voltage communication according to an embodiment of the disclosure includes a first communication line and a second communication line that are connected to a slave device for communication with the slave device through a voltage difference between ends of the first communication line and the second communication line, a voltage sensor configured to sense a voltage between the ends of the first communication line and the second communication line, and at least one processor configured to, based on the sensed voltage being less than or equal to a preset voltage, transmit a command to perform connection control such that one of a first resistor on the side of the master device that is connectable to the first communication line and a third resistor on the side of the slave device that is connectable to the first communication line serves as a pull-up resistor, and to perform connection control such that one of a second resistor on the side of the master device that is connectable to the second communication line and a fourth resistor on the side of the slave device that is connectable to the second communication line serves as a pull-down resistor.

According to an embodiment of the disclosure, the performing of the connection control such that the one of the first resistor on the side of the master device that is connectable to the first communication line and the third resistor on the side of the slave device that is connectable to the first communication line serves as the pull-up resistor includes turning on at least one of a first switch connected to each of the first resistor on the side of the master device, which is connected to a first signal power supply, and the first communication line, or a second switch connected to each of the third resistor on the side of the slave device, which is connected to a second signal power supply, and the first communication line, and the performing of the connection control such that the one of the second resistor on the side of the master device that is connectable to the second communication line, or the fourth resistor on the side of the slave device that is connectable to the second communication line serves as the pull-down resistor includes turning on at least one of a third switch connected to each of the second resistor on the side of the master device, which is connected to a first signal ground, and the second communication line, or a fourth switch connected to each of the fourth resistor on the side of the slave device, which is connected to a second signal ground, and the second communication line.

According to an embodiment of the disclosure, the first communication line and the second communication line are connected to a second slave device, and the at least one processor is further configured to, based on the voltage sensed by the voltage sensor being less than or equal to the preset voltage, transmit a command to turn off a fifth switch connected to each of the first communication line on the side of the second slave device connected to the second slave device, and a fifth resistor, and a sixth switch connected to each of the second communication line on the side of the second slave device and a sixth resistor.

According to an embodiment of the disclosure, the at least one processor is further configured to exclude the slave device having the resistors connected in reverse polarity to the first communication line and the second communication line, respectively, among the first slave device and the second slave device, from control targets or communication targets.

According to an embodiment of the disclosure, the excluding, by the at least one processor, the slave device having the resistors connected in the reverse polarity to the first communication line and the second communication line, respectively, among the N slave devices, from the control targets or the communication targets includes excluding the slave device from the control targets or the communication targets by performing a tracking operation.

According to an embodiment of the disclosure, the at least one processor is further configured to transmit, to the slave device having the resistors connected in reverse polarity to the first communication line and the second communication line, respectively, among the first slave device and the second slave device, a command to turn off the second switch between the first communication line and the third resistor or the fifth switch between the first communication line and the fifth resistor, and the fourth switch between the second communication line and the fourth resistor or the sixth switch between the second communication line and the sixth resistor.

According to an embodiment of the disclosure, the communication through the first communication line and the second communication line is RS-485 communication or Modbus communication.

An air conditioner device according to an embodiment of the disclosure includes a first communication line and a second communication line that are connected to a master device for differential voltage communication, a communication unit configured to communicate with the master device through the first communication line and the second communication line, a pull-up resistor connected to a signal power supply and connectable to the first communication line, a first switch to connect the pull-up resistor to the first communication line, a pull-down resistor connected to a signal ground and connectable to the second communication line, a second switch to connect the pull-down resistor to the second communication line, and a slave device including at least one processor configured to, based on a voltage, which is sensed between the first communication line and the second communication line and then received from the master device through the communication unit, being less than or equal to a preset voltage, and an on-off command on the first switch and the second switch being received, perform on-off control of the first switch and the second switch based on the received on-off command.

According to an embodiment of the disclosure, the at least one processor is further configured to receive a response message request from the master device and transmit a response message to the master device in response to the response message request.

According to an embodiment of the disclosure, the slave device is an indoor unit of the air conditioner device, and the at least one processor of the slave device is further configured to receive the on/off command on the first switch and the second switch, from the master device that is an outdoor unit.

A master device for performing differential voltage communication according to an embodiment of the disclosure includes a first communication line and a second communication line that are connected to each of a plurality of slave devices for communication with the plurality of slave devices through a voltage difference between ends of the first communication line and the second communication line, a voltage sensor configured to sense a voltage between the first communication line and the second communication line, and at least one processor configured to, based on the sensed voltage being less than or equal to a preset voltage, perform control such that the first communication line is connected to any one of a first resistor on the side of the master device that is connectable to the first communication line and is connected to a signal power supply, and a plurality of first slave-side resistors on the sides of the plurality of slave devices that are connectable to the first communication line and are connected to another signal power supply, and perform control such that the second communication line is connected to any one of a second resistor on the side of the master device that is connectable to the second communication line and is connected to a signal ground, and a plurality of second slave-side resistors on the sides of the plurality of slave devices that are connectable to the second communication line and are connected to another signal ground.

A slave device according to an embodiment of the disclosure includes a first communication line and a second communication line that are connected to a master device for differential voltage communication, a communication unit configured to communicate with the master device through the first communication line and the second communication line, a pull-up resistor connected to a signal power supply and connectable to the first communication line, a first switch to connect the pull-up resistor to the first communication line, a pull-down resistor connected to a signal ground and connectable to the second communication line, a second switch to connect the pull-down resistor to the second communication line, and at least one processor configured to, based on a voltage, which is sensed between the first communication line and the second communication line and then received from the master device through the communication unit, being less than or equal to a preset voltage, and an on-off command on the first switch and the second switch being received, perform on-off control of the first switch and the second switch based on the received on-off command.

A master device according to an embodiment of the disclosure includes a first communication line and a second communication line that are connected to each of a plurality of slave devices for communication with the plurality of slave devices through a voltage difference between ends of the first communication line and the second communication line, a voltage sensor configured to sense a voltage between the first communication line and the second communication line, and at least one processor configured to, based on the sensed voltage being less than or equal to a preset voltage, perform control such that the first communication line is connected to any one of a first resistor on the side of the master device that is connectable to the first communication line and is connected to a signal power supply, and a plurality of first slave-side resistors on the sides of the plurality of slave devices that are connectable to the first communication line and are connected to another signal power supply, and perform control such that the second communication line is connected to any one of a second resistor on the side of the master device that is connectable to the second communication line and is connected to a signal ground, and a plurality of second slave-side resistors on the sides of the plurality of slave devices that are connectable to the second communication line and are connected to another signal ground.

In an embodiment of the disclosure, the at least one processor is further configured to, based on the sensed voltage being less than or equal to the preset voltage, perform control such that any one of a first switch connecting the first communication line to the first resistor on the side of the master device connected to the signal power supply, and a plurality of first slave-side switches connecting to the first communication line to the plurality of first slave-side resistors is turned on, and perform control such that any one of a second switch connecting the second communication line to the second resistor on the master device side, and a plurality of second slave-side switches connecting the second communication line to the plurality of second slave-side resistors is turned on.

In an embodiment of the disclosure, the pair of switches to be turned on are a pair of switches closest to any one of the master device and the plurality of slave devices.

In an embodiment of the disclosure, the at least one processor of the master device is further configured to assign different addresses to N slave devices.

In an embodiment of the disclosure, the at least one processor of the master device is further configured to transmit a response message request to the N slave devices, and assign the addresses according to an order in which response messages to the response message request are received from the N slave devices, or assigns the addresses according to an order of magnitude of voltage values monitored by the N slave devices.

In an embodiment of the disclosure, the at least one processor of the master device is further configured to obtain unique device information of at least some of the N slave devices from the at least some slave devices, based on the addresses assigned to the N slave devices.

In an embodiment of the disclosure, the unique device information of the at least some slave devices includes at least one of addresses of the at least some slave devices, model names of the at least some slave devices, serial numbers of the at least some slave devices, database codes corresponding to the at least some slave devices, or providable-function data of the at least some slave devices.

In an embodiment of the disclosure, the at least one processor of the master device is further configured to control the at least some slave devices based on the device information.

In an embodiment of the disclosure, the at least one processor of the master device is further configured to perform fault diagnosis of the at least some slave devices based on the database codes corresponding to the at least some slave devices.

In an embodiment of the disclosure, the at least one processor of the master device is further configured to perform control such that the providable-function data of the at least some slave devices is displayed on a display device being used by a user.

Some embodiments of the disclosure may be implemented as a recording medium including computer-readable instructions such as a computer-executable program module. The computer-readable medium may be any available medium which is accessible by a computer, and may include a volatile or non-volatile medium and a removable or non-removable medium. Also, the computer-readable medium may include a computer storage medium and a communication medium. The computer storage media include both volatile and non-volatile, removable and non-removable media implemented in any method or technique for storing information such as computer readable instructions, data structures, program modules or other data. The communication media typically include computer-readable instructions, data structures, program modules, other data of a modulated data signal, or other transmission mechanisms, and examples thereof include an arbitrary information transmission medium. Also, some embodiments of the disclosure may be implemented as a computer program or a computer program product including computer-executable instructions such as a computer program executed by a computer.

A machine-readable storage medium may be provided in the form of a non-transitory storage medium. Here, the term 'non-transitory storage medium' refers to a tangible device and does not include a signal (e.g., an electromagnetic wave), and the term 'non-transitory storage medium' does not distinguish between a case where data is stored in a storage medium semi-permanently and a case where data is stored temporarily. For example, the non-transitory storage medium may include a buffer in which data is temporarily stored.

According to an embodiment of the disclosure, the methods according to various embodiments disclosed herein may be included in a computer program product and then provided. The computer program product may be traded as commodities between sellers and buyers. The computer program product may be distributed in the form of a machine-readable storage medium (e.g., a compact disc (CD) ROM (CD-ROM), or may be distributed online (e.g., downloaded or uploaded) through an application store or directly between two user devices (e.g., smart phones). In a case of online distribution, at least a portion of the computer program product (e.g., a downloadable app) may be temporarily stored in a machine-readable storage medium such as a manufacturer's server, an application store's server, or a memory of a relay server.

## Claims

1. An air conditioner device comprising:
a first communication line (101) and a second communication line (102) that are connected to a first slave device (2001) for communication with the first slave device through a voltage difference between ends of the first communication line and the second communication line;
a voltage sensor (1200) configured to sense a voltage between the ends of the first communication line (101) and the second communication line (102); and
a master device (1000) comprising at least one processor (1100) configured to, based on the sensed voltage being less than or equal to a preset voltage, transmit a command to perform connection control such that one of a first resistor (11) on a side of the master device (1000) that is connectable to the first communication line and a third resistor (21) on a side of the first slave device (2001) that is connectable to the first communication line (101) serves as a pull-up resistor, and to perform connection control such that one of a second resistor (12) on a side of the master device (1000) that is connectable to the second communication line and a fourth resistor (22) on a side of the first slave device (2001) that is connectable to the second communication line serves as a pull-down resistor.

2. The air conditioner device of claim 1, wherein the master device (1000) is an outdoor unit (3100) of the air conditioner device (3000).

3. The air conditioner device of claim 2, wherein the transmitting, by the at least one processor (1100), of the command to perform the connection control comprises transmitting the command to the first slave device (2001) that is an indoor unit (3200) of the air conditioner device.

4. The air conditioner device of claim 1, wherein the master device (1000) is an indoor unit (3200) of the air conditioner device.

5. The air conditioner device of claim 4, wherein the transmitting, by the at least one processor (1100), of the command to perform the connection control comprises transmitting the command to another indoor unit (3200) of the air conditioner device or to the first slave device (2001) that is an outdoor unit (3100) of the air conditioner device (3000).

6. The air conditioner device of any one of claims 1 to 5, wherein the performing of the connection control such that the one of the first resistor (11) on the side of the master device that is connectable to the first communication line (101) and the third resistor (21) on the side of the first slave device that is connectable to the first communication line (101) serves as the pull-up resistor comprises turning on one of a first switch (1011) connected to each of the first resistor (11) on the side of the master device (1000), which is connected to a first signal power supply, and the first communication line (101) and a second switch (2021) connected to each of the third resistor (21) on the side of the first slave device, which is connected to a second signal power supply, and the first communication line (101), and
the performing of the connection control such that the one of the second resistor (12) on the side of the master device (1000) that is connectable to the second communication line and the fourth resistor (22) on the side of the first slave device (2001) that is connectable to the second communication line serves as the pull-down resistor comprises turning on one of a third switch (1012) connected to each of the second resistor (12) on the side of the master device, which is connected to a first signal ground, and the second communication line and a fourth switch (2022) connected to each of the fourth resistor (22) on the side of the first slave device, which is connected to a second signal ground, and the second communication line.

7. The air conditioner device of any one of claims 1 to 6, wherein the first communication line (101) and the second communication line (102) are connected to a second slave device (2002), and
the at least one processor (1100) is further configured to, based on the voltage sensed by the voltage sensor (1200) being less than or equal to the preset voltage, transmit a command to turn off a fifth switch (2031) connected to each of the first communication line (101) on a side of the second slave device (2002) connected to the second slave device, and a fifth resistor (31), and a sixth switch (2032) connected to each of the second communication line (102) on the side of the second slave device (2002), and a sixth resistor (32).

8. The air conditioner device of any one of claims 1 to 7, wherein the at least one processor (1100) is further configured to exclude a slave device being connected in reverse polarity to the first communication line and the second communication line, respectively, among the first slave device (2001) and the second slave device (2002), from control targets or communication targets.

9. The air conditioner device of any one of claims 1 to 7, wherein the at least one processor (1100) is further configured to transmit, to a slave device being connected in reverse polarity to the first communication line and the second communication line, respectively, among the first slave device (2001) and the second slave device (2002), a command to turn off the second switch (2021) between the first communication line (101) and the third resistor (21) or the fifth switch (2031) between the first communication line (101) and the fifth resistor (31), and the fourth switch (2022) between the second communication line (102) and the fourth resistor (22) or the sixth switch (2032) between the second communication line (102) and the sixth resistor (32).

10. The air conditioner device of any one of claims 1 to 9, wherein the communication through the first communication line (101) and the second communication line (102) is RS-485 communication or Modbus communication.

11. A master device comprising:
a first communication line (101) and a second communication line (102) that are connected to a first slave device (2001) for communication with the first slave device through a voltage difference between ends of the first communication line (101) and the second communication line (102);
a voltage sensor (1200) configured to sense a voltage between the ends of the first communication line (101) and the second communication line (102); and
at least one processor (1100) configured to, based on the sensed voltage being less than or equal to a preset voltage, transmit a command to perform connection control such that one of a first resistor (11) on a side of the master device (1000) that is connectable to the first communication line (101) and a third resistor (21) on a side of the first slave device (2001) that is connectable to the first communication line (101) serves as a pull-up resistor, and to perform connection control such that one of a second resistor (12) on a side of the master device (1000) that is connectable to the second communication line (102) and a fourth resistor (22) on a side of the first slave device that is connectable to the second communication line serves as a pull-down resistor.

12. The master device of claim 11, wherein the performing of the connection control such that the one of the first resistor (11) on the side of the master device (1000) that is connectable to the first communication line (101) and the third resistor (21) on the side of the first slave device (2001) that is connectable to the first communication line (101) serves as the pull-up resistor comprises turning on one of a first switch (1011) connected to each of the first resistor (11) on the side of the master device (1000), which is connected to a signal power supply, and the first communication line (101) and a second switch (2021) connected to each of the third resistor (21) on the side of the first slave device (2001), which is connected to a second signal power supply, and the first communication line (101), and
the performing of the connection control such that the one of the second resistor (12) on the side of the master device (1000) that is connectable to the second communication line (102) and the fourth resistor (22) on the side of the first slave (2001) device that is connectable to the second communication line (102) serves as the pull-down resistor comprises turning on one of a third switch (1012) connected to each of the second resistor (12) on the side of the master device (1000), which is connected to a signal ground, and the second communication line (102) and a fourth switch (2022) connected to each of the fourth resistor (22) on the side of the first slave device (2001), which is connected to a second signal ground, and the second communication line (102).

13. The master device (1000) of claim 11 or claim 12, wherein the first communication line (101) and the second communication line (102) are connected to a second slave device (2002), and
the at least one processor (1100) is further configured to, based on the voltage sensed by the voltage sensor (1200) being less than or equal to the preset voltage, transmit a command to turn off a fifth switch (2031) connected to each of the first communication line (101) on a side of the second slave device (2002) connected to the second slave device, and a fifth resistor (31), and a sixth switch (32) connected to each of the second communication line (102) on the side of the second slave device (2002), and a sixth resistor (32).

14. The master device of any one of claims 11 to 13, wherein the at least one processor (1100) is further configured to exclude a slave device among the first slave device (2001) and the second slave device (2002) being connected in reverse polarity to the first communication line (101) and the second communication line (102), respectively, from control targets or communication targets.

15. The master device of claim 14, wherein the excluding, by the at least one processor (1100), the slave device being connected in the reverse polarity to the first communication line and the second communication line, respectively, among N (>2) slave devices, from the control targets or the communication targets comprises excluding the slave device from the control targets or the communication targets by performing a tracking operation.

## Patentansprüche

1. Klimaanlagengerät, umfassend:
eine erste Kommunikationsleitung (101) und eine zweite Kommunikationsleitung (102), die mit einem ersten Slavegerät (2001) zur Kommunikation mit dem ersten Slavegerät durch eine Spannungsdifferenz zwischen Enden der ersten Kommunikationsleitung und der zweiten Kommunikationsleitung verbunden sind;
einen Spannungssensor (1200), der dazu konfiguriert ist, eine Spannung zwischen den Enden der ersten Kommunikationsleitung (101) und der zweiten Kommunikationsleitung (102) zu erfassen; und
ein Mastergerät (1000), das zumindest einen Prozessor (1100) umfasst, der dazu konfiguriert ist, basierend darauf, dass die erfasste Spannung weniger als oder gleich einer voreingestellten Spannung ist, einen Befehl zu übertragen, um Verbindungssteuerung durchzuführen, sodass eines von einem ersten Widerstand (11) auf einer Seite des Mastergeräts (1000), der mit der ersten Kommunikationsleitung verbindbar ist, und einem dritten Widerstand (21) auf einer Seite des ersten Slavegeräts (2001), der mit der ersten Kommunikationsleitung (101) verbindbar ist, als ein Pull-up-Widerstand dient, und um Verbindungssteuerung durchzuführen, sodass eines von einem zweiten Widerstand (12) auf einer Seite des Mastergeräts (1000), der mit der zweiten Kommunikationsleitung verbindbar ist, und einem vierten Widerstand (22) auf einer Seite des ersten Slavegeräts (2001), der mit der zweiten Kommunikationsleitung verbindbar ist, als ein Pull-down-Widerstand dient.

2. Klimaanlagengerät nach Anspruch 1, wobei das Mastergerät (1000) eine Außeneinheit (3100) des Klimaanlagengeräts (3000) ist.

3. Klimaanlagengerät nach Anspruch 2, wobei das Übertragen, durch den zumindest einen Prozessor (1100), des Befehls, um die Verbindungssteuerung durchzuführen, Übertragen des Befehls an das erste Slavegerät (2001), das eine Inneneinheit (3200) des Klimaanlagengeräts ist, umfasst.

4. Klimaanlagengerät nach Anspruch 1, wobei das Mastergerät (1000) eine Inneneinheit (3200) des Klimaanlagengeräts ist.

5. Klimaanlagengerät nach Anspruch 4, wobei das Übertragen, durch den zumindest einen Prozessor (1100), des Befehls, um die Verbindungssteuerung durchzuführen, Übertragen des Befehls an eine andere Inneneinheit (3200) des Klimaanlagengeräts oder an das erste Slavegerät (2001), das eine Außeneinheit (3100) des Klimaanlagengeräts (3000) ist, umfasst.

6. Klimaanlagengerät nach einem der Ansprüche 1 bis 5, wobei das Durchführen der Verbindungssteuerung, sodass der eine von dem ersten Widerstand (11) auf der Seite des Mastergeräts, der mit der ersten Kommunikationsleitung (101) verbindbar ist, und dem dritten Widerstand (21) auf der Seite des ersten Slavegeräts, der mit der ersten Kommunikationsleitung (101) verbindbar ist, als der Pull-up-Widerstand dient, Einschalten von einem von einem ersten Schalter (1011), der mit jedem von dem ersten Widerstand (11) auf der Seite des Mastergeräts (1000), der mit einer ersten Signalleistungszufuhr verbunden ist, und der ersten Kommunikationsleitung (101) verbunden ist, und einem zweiten Schalter (2021), der mit jedem von dem dritten Widerstand (21) auf der Seite des ersten Slavegeräts, der mit einer zweiten Signalleistungszufuhr verbunden ist, und der ersten Kommunikationsleitung (101) verbunden ist, umfasst und
das Durchführen der Verbindungssteuerung, sodass der eine von dem zweiten Widerstand (12) auf der Seite des Mastergeräts (1000), der mit der zweiten Kommunikationsleitung verbindbar ist, und dem vierten Widerstand (22) auf der Seite des ersten Slavegeräts (2001), der mit der zweiten Kommunikationsleitung verbindbar ist, als der Pull-down-Widerstand dient, Einschalten von einem von einem dritten Schalter (1012), der mit jedem von dem zweiten Widerstand (12) auf der Seite des Mastergeräts, der mit einer ersten Signalmasse verbunden ist, und der zweiten Kommunikationsleitung verbunden ist, und einem vierten Schalter (2022), der mit jedem von dem vierten Widerstand (22) auf der Seite des ersten Slavegeräts, der mit einer zweiten Signalmasse verbunden ist, und der zweiten Kommunikationsleitung verbunden ist, umfasst.

7. Klimaanlagengerät nach einem der Ansprüche 1 bis 6, wobei die erste Kommunikationsleitung (101) und die zweite Kommunikationsleitung (102) mit einem zweiten Slavegerät (2002) verbunden sind und
der zumindest eine Prozessor (1100) ferner dazu konfiguriert ist, basierend darauf, dass die Spannung, die durch den Spannungssensor (1200) erfasst wird, weniger als oder gleich der voreingestellten Spannung ist, einen Befehl zum Ausschalten eines fünften Schalters (2031), der mit jedem von der ersten Kommunikationsleitung (101) auf einer Seite des zweiten Slavegeräts (2002), die mit dem zweiten Slavegerät verbunden ist, und einem fünften Widerstand (31) verbunden ist, und eines sechsten Schalters (2032), der mit jedem von der zweiten Kommunikationsleitung (102) auf der Seite des zweiten Slavegeräts (2002) und einem sechsten Widerstand (32) verbunden ist, zu übertragen.

8. Klimaanlagengerät nach einem der Ansprüche 1 bis 7, wobei der zumindest eine Prozessor (1100) ferner dazu konfiguriert ist, ein Slavegerät, das in umgekehrter Polarität jeweils mit der ersten Kommunikationsleitung und der zweiten Kommunikationsleitung verbunden ist, unter dem ersten Slavegerät (2001) und dem zweiten Slavegerät (2002) von Steuerzielen oder Kommunikationszielen auszuschließen.

9. Klimaanlagengerät nach einem der Ansprüche 1 bis 7, wobei der zumindest eine Prozessor (1100) ferner dazu konfiguriert ist, an ein Slavegerät, das in umgekehrter Polarität jeweils mit der ersten Kommunikationsleitung und der zweiten Kommunikationsleitung verbunden ist, unter dem ersten Slavegerät (2001) und dem zweiten Slavegerät (2002) einen Befehl zum Ausschalten des zweiten Schalters (2021) zwischen der ersten Kommunikationsleitung (101) und dem dritten Widerstand (21) oder des fünften Schalters (2031) zwischen der ersten Kommunikationsleitung (101) und dem fünften Widerstand (31) und des vierten Schalters (2022) zwischen der zweiten Kommunikationsleitung (102) und dem vierten Widerstand (22) oder des sechsten Schalters (2032) zwischen der zweiten Kommunikationsleitung (102) und dem sechsten Widerstand (32) zu übertragen.

10. Klimaanlagengerät nach einem der Ansprüche 1 bis 9, wobei die Kommunikation durch die erste Kommunikationsleitung (101) und die zweite Kommunikationsleitung (102) RS-485-Kommunikation oder Modbus-Kommunikation ist.

11. Mastergerät, umfassend:
eine erste Kommunikationsleitung (101) und eine zweite Kommunikationsleitung (102), die mit einem ersten Slavegerät (2001) zur Kommunikation mit dem ersten Slavegerät durch eine Spannungsdifferenz zwischen Enden der ersten Kommunikationsleitung (101) und der zweiten Kommunikationsleitung (102) verbunden sind;
einen Spannungssensor (1200), der dazu konfiguriert ist, eine Spannung zwischen den Enden der ersten Kommunikationsleitung (101) und der zweiten Kommunikationsleitung (102) zu erfassen; und
zumindest einen Prozessor (1100), der dazu konfiguriert ist, basierend darauf, dass die erfasste Spannung weniger als oder gleich einer voreingestellten Spannung ist, einen Befehl zu übertragen, um Verbindungssteuerung durchzuführen, sodass eines von einem ersten Widerstand (11) auf einer Seite des Mastergeräts (1000), der mit der ersten Kommunikationsleitung (101) verbindbar ist, und einem dritten Widerstand (21) auf einer Seite des ersten Slavegeräts (2001), der mit der ersten Kommunikationsleitung (101) verbindbar ist, als ein Pull-up-Widerstand dient, und um Verbindungssteuerung durchzuführen, sodass eines von einem zweiten Widerstand (12) auf einer Seite des Mastergeräts (1000), der mit der zweiten Kommunikationsleitung (102) verbindbar ist, und einem vierten Widerstand (22) auf einer Seite des ersten Slavegeräts, der mit der zweiten Kommunikationsleitung verbindbar ist, als ein Pull-down-Widerstand dient.

12. Mastergerät nach Anspruch 11, wobei das Durchführen der Verbindungssteuerung, sodass der eine von dem ersten Widerstand (11) auf der Seite des Mastergeräts (1000), der mit der ersten Kommunikationsleitung (101) verbindbar ist, und dem dritten Widerstand (21) auf der Seite des ersten Slavegeräts (2001), der mit der ersten Kommunikationsleitung (101) verbindbar ist, als der Pull-up-Widerstand dient, Einschalten von einem von einem ersten Schalter (1011), der mit jedem von dem ersten Widerstand (11) auf der Seite des Mastergeräts (1000), der mit einer Signalleistungszufuhr verbunden ist, und der ersten Kommunikationsleitung (101) verbunden ist, und einem zweiten Schalter (2021), der mit jedem von dem dritten Widerstand (21) auf der Seite des ersten Slavegeräts (2001), der mit einer zweiten Signalleistungszufuhr verbunden ist, und der ersten Kommunikationsleitung (101) verbunden ist, umfasst und
das Durchführen der Verbindungssteuerung, sodass der eine von dem zweiten Widerstand (12) auf der Seite des Mastergeräts (1000), der mit der zweiten Kommunikationsleitung (102) verbindbar ist, und dem vierten Widerstand (22) auf der Seite des ersten Slavegeräts (2001), der mit der zweiten Kommunikationsleitung (102) verbindbar ist, als der Pull-down-Widerstand dient, Einschalten von einem von einem dritten Schalter (1012), der mit jedem von dem zweiten Widerstand (12) auf der Seite des Mastergeräts (1000), der mit einer Signalmasse verbunden ist, und der zweiten Kommunikationsleitung (102) verbunden ist, und einem vierten Schalter (2022), der mit jedem von dem vierten Widerstand (22) auf der Seite des ersten Slavegeräts (2001), der mit einer zweiten Signalmasse verbunden ist, und der zweiten Kommunikationsleitung (102) verbunden ist, umfasst.

13. Mastergerät (1000) nach Anspruch 11 oder Anspruch 12, wobei die erste Kommunikationsleitung (101) und die zweite Kommunikationsleitung (102) mit einem zweiten Slavegerät (2002) verbunden sind und
der zumindest eine Prozessor (1100) ferner dazu konfiguriert ist, basierend darauf, dass die Spannung, die durch den Spannungssensor (1200) erfasst wird, weniger als oder gleich der voreingestellten Spannung ist, einen Befehl zum Ausschalten eines fünften Schalters (2031), der mit jedem von der ersten Kommunikationsleitung (101) auf einer Seite des zweiten Slavegeräts (2002), die mit dem zweiten Slavegerät verbunden ist, und einem fünften Widerstand (31) verbunden ist, und eines sechsten Schalters (32), der mit jedem von der zweiten Kommunikationsleitung (102) auf der Seite des zweiten Slavegeräts (2002) und einem sechsten Widerstand (32) verbunden ist, zu übertragen.

14. Mastergerät nach einem der Ansprüche 11 bis 13, wobei der zumindest eine Prozessor (1100) ferner dazu konfiguriert ist, ein Slavegerät unter dem ersten Slavegerät (2001) und dem zweiten Slavegerät (2002), die in umgekehrter Polarität jeweils mit der ersten Kommunikationsleitung (101) und der zweiten Kommunikationsleitung (102) verbunden sind, von Steuerzielen oder Kommunikationszielen auszuschließen.

15. Mastergerät nach Anspruch 14, wobei das Ausschließen, durch den zumindest einen Prozessor (1100), des Slavegeräts, das in der umgekehrten Polarität jeweils mit der ersten Kommunikationsleitung und der zweiten Kommunikationsleitung verbunden ist, unter N (>2) Slavegeräten, von den Steuerzielen oder den Kommunikationszielen Ausschließen des Slavegeräts von den Steuerzielen oder den Kommunikationszielen durch Durchführen eines Verfolgungsvorgangs umfasst.

## Revendications

1. Dispositif de climatisation comprenant :
une première ligne de communication (101) et une seconde ligne de communication (102) qui sont connectées à un premier dispositif esclave (2001) de manière à communiquer avec le premier dispositif esclave par l'intermédiaire d'une différence de tension entre les extrémités de la première ligne de communication et de la seconde ligne de communication ;
un capteur de tension (1200) configuré pour détecter une tension entre les extrémités de la première ligne de communication (101) et de la seconde ligne de communication (102) ; et
un dispositif maître (1000) comprenant au moins un processeur (1100) configuré pour, en fonction de la tension détectée qui est inférieure ou égale à une tension prédéfinie, transmettre une commande de manière à effectuer un contrôle de connexion de sorte que l'une d'une première résistance (11) du côté du dispositif maître (1000) qui peut être connectée à la première ligne de communication et d'une troisième résistance (21) du côté du premier dispositif esclave (2001) qui peut être connectée à la première ligne de communication (101) serve de résistance d'excursion haute, et de manière à effectuer un contrôle de connexion de sorte que l'une d'une deuxième résistance (12) du côté du dispositif maître (1000) qui peut être connectée à la seconde ligne de communication et d'une quatrième résistance (22) du côté du premier dispositif esclave (2001) qui peut être connectée à la seconde ligne de communication serve de résistance d'excursion basse.

2. Dispositif de climatisation selon la revendication 1, ledit dispositif maître (1000) étant une unité externe (3100) du dispositif de climatisation (3000).

3. Dispositif de climatisation selon la revendication 2, ladite transmission, par ledit au moins un processeur (1100), de la commande de manière à effectuer la commande de connexion comprenant la transmission de la commande au premier dispositif esclave (2001) qui est une unité interne (3200) du dispositif de climatisation.

4. Dispositif de climatisation selon la revendication 1, ledit dispositif maître (1000) étant une unité interne (3200) du dispositif de climatisation.

5. Dispositif de climatisation selon la revendication 4, ladite transmission, par ledit au moins un processeur (1100), de la commande de manière à effectuer la commande de connexion comprenant la transmission de la commande à une autre unité interne (3200) du dispositif de climatisation ou au premier dispositif esclave (2001) qui est une unité externe (3100) du dispositif de climatisation (3000).

6. Dispositif de climatisation selon l'une quelconque des revendications 1 à 5, ladite réalisation de la commande de connexion de sorte que l'une de la première résistance (11) du côté du dispositif maître qui peut être connectée à la première ligne de communication (101) et de la troisième résistance (21) du côté du premier dispositif esclave qui peut être connectée à la première ligne de communication (101) serve de résistance d'excursion haute comprenant la mise en marche de l'un d'un premier commutateur (1011) connecté à chacune de la première résistance (11) du côté du dispositif maître (1000), qui est connecté à une première alimentation en énergie de signal, et de la première ligne de communication (101) et d'un deuxième commutateur (2021) connecté à chacune de la troisième résistance (21) du côté du premier dispositif esclave, qui est connecté à une seconde alimentation en énergie de signal, et de la première ligne de communication (101), et
la réalisation de la commande de connexion de sorte que celle de la deuxième résistance (12) du côté du dispositif maître (1000) qui peut être connectée à la seconde ligne de communication et de la quatrième résistance (22) du côté du premier dispositif esclave (2001) qui peut être connectée à la seconde ligne de communication serve de résistance d'excursion basse comprenne la mise en marche de l'un d'un troisième commutateur (1012) connecté à chacune de la deuxième résistance (12) du côté du dispositif maître, qui est connecté à une première masse de signal, et de la seconde ligne de communication et d'un quatrième commutateur (2022) connecté à chacune de la quatrième résistance (22) du côté du premier dispositif esclave, qui est connecté à une seconde masse de signal, et de la seconde ligne de communication.

7. Dispositif de climatisation selon l'une quelconque des revendications 1 à 6, ladite première ligne de communication (101) et ladite seconde ligne de communication (102) étant connectées à un second dispositif esclave (2002), et
ledit au moins un processeur (1100) étant en outre configuré pour, en fonction de la tension détectée par le capteur de tension (1200) qui est inférieure ou égale à la tension prédéfinie, transmettre une commande de mise à l'arrêt d'un cinquième commutateur (2031) connecté à chacune de la première ligne de communication (101) d'un côté du second dispositif esclave (2002) connecté au second dispositif esclave, et d'une cinquième résistance (31), et d'un sixième commutateur (2032) connecté à chacune de la seconde ligne de communication (102) du côté du second dispositif esclave (2002), et d'une sixième résistance (32).

8. Dispositif de climatisation selon l'une quelconque des revendications 1 à 7, ledit au moins un processeur (1100) étant en outre configuré pour exclure un dispositif esclave connecté en polarité inverse à la première ligne de communication et à la seconde ligne de communication, respectivement, parmi le premier dispositif esclave (2001) et le second dispositif esclave (2002), à partir de cibles de commande ou de cibles de communication.

9. Dispositif de climatisation selon l'une quelconque des revendications 1 à 7, ledit au moins un processeur (1100) étant en outre configuré pour transmettre, à un dispositif esclave connecté en polarité inverse à la première ligne de communication et à la seconde ligne de communication, respectivement, entre le premier dispositif esclave (2001) et le second dispositif esclave (2002), une commande de mise à l'arrêt du second commutateur (2021) entre la première ligne de communication (101) et la troisième résistance (21) ou du cinquième commutateur (2031) entre la première ligne de communication (101) et la cinquième résistance (31), et du quatrième commutateur (2022) entre la seconde ligne de communication (102) et la quatrième résistance (22) ou du sixième commutateur (2032) entre la seconde ligne de communication (102) et la sixième résistance (32).

10. Dispositif de climatisation selon l'une quelconque des revendications 1 à 9, ladite communication à travers ladite première ligne de communication (101) et ladite seconde ligne de communication (102) étant une communication RS-485 ou une communication Modbus.

11. Dispositif maître, comprenant :
une première ligne de communication (101) et une seconde ligne de communication (102) qui sont connectées à un premier dispositif esclave (2001) de manière à communiquer avec le premier dispositif esclave par l'intermédiaire d'une différence de tension entre les extrémités de la première ligne de communication (101) et de la seconde ligne de communication (102) ;
un capteur de tension (1200) configuré pour détecter une tension entre les extrémités de la première ligne de communication (101) et de la seconde ligne de communication (102) ; et
au moins un processeur (1100) configuré pour, en fonction de la tension détectée qui est inférieure ou égale à une tension prédéfinie, transmettre une commande de manière à effectuer un contrôle de connexion de sorte que l'une d'une première résistance (11) du côté du dispositif maître (1000) qui peut être connectée à la première ligne de communication (101) et d'une troisième résistance (21) du côté du premier dispositif esclave (2001) qui peut être connectée à la première ligne de communication (101) serve de résistance d'excursion haute, et de manière à effectuer un contrôle de connexion de sorte que l'une d'une deuxième résistance (12) du côté du dispositif maître (1000) qui peut être connectée à la seconde ligne de communication (102) et d'une quatrième résistance (22) du côté du premier dispositif esclave qui peut être connectée à la seconde ligne de communication serve de résistance d'excursion basse.

12. Dispositif maître selon la revendication 11, ladite réalisation de la commande de connexion de sorte que l'une de la première résistance (11) du côté du dispositif maître (1000) qui peut être connectée à la première ligne de communication (101) et de la troisième résistance (21) du côté du premier dispositif esclave (2001) qui peut être connectée à la première ligne de communication (101) serve de résistance d'excursion haute comprenant la mise en marche de l'un d'un premier commutateur (1011) connecté à chacune de la première résistance (11) du côté du dispositif maître (1000), qui est connecté à une alimentation en énergie de signal, et de la première ligne de communication (101) et d'un deuxième commutateur (2021) connecté à chacune de la troisième résistance (21) du côté du premier dispositif esclave (2001), qui est connecté à une seconde alimentation en énergie de signal, et de la première ligne de communication (101), et
la réalisation de la commande de connexion de sorte que celle de la deuxième résistance (12) du côté du dispositif maître (1000) qui peut être connectée à la seconde ligne de communication (102) et de la quatrième résistance (22) du côté du premier dispositif esclave (2001) qui peut être connectée à la seconde ligne de communication (102) serve de résistance d'excursion basse comprenne la mise en marche de l'un d'un troisième commutateur (1012) connecté à chacune de la deuxième résistance (12) du côté du dispositif maître (1000), qui est connecté à une première masse de signal, et de la seconde ligne de communication (102) et d'un quatrième commutateur (2022) connecté à chacune de la quatrième résistance (22) du côté du premier dispositif esclave (2001), qui est connecté à une seconde masse de signal, et de la seconde ligne de communication (102).

13. Dispositif maître (1000) selon la revendication 11 ou la revendication 12, ladite première ligne de communication (101) et ladite seconde ligne de communication (102) étant connectées à un second dispositif esclave (2002), et
ledit au moins un processeur (1100) étant en outre configuré pour, en fonction de la tension détectée par le capteur de tension (1200) qui est inférieure ou égale à la tension prédéfinie, transmettre une commande de mise à l'arrêt d'un cinquième commutateur (2031) connecté à chacune de la première ligne de communication (101) d'un côté du second dispositif esclave (2002) connecté au second dispositif esclave, et d'une cinquième résistance (31), et d'un sixième commutateur (32) connecté à chacune de la seconde ligne de communication (102) du côté du second dispositif esclave (2002), et d'une sixième résistance (32).

14. Dispositif maître selon l'une quelconque des revendications 11 à 13, ledit au moins un processeur (1100) étant en outre configuré pour exclure un dispositif esclave parmi le premier dispositif esclave (2001) et le second dispositif esclave (2002) connecté en polarité inverse à la première ligne de communication (101) et à la seconde ligne de communication (102), respectivement, à partir de cibles de commande ou de cibles de communication.

15. Dispositif maître selon la revendication 14, ladite exclusion, par ledit au moins un processeur (1100), du dispositif esclave connecté en polarité inverse à la première ligne de communication et à la seconde ligne de communication, respectivement, parmi N (>2) dispositifs esclaves, à partir des cibles de commande ou des cibles de communication comprenant l'exclusion du dispositif esclave à partir des cibles de commande ou des cibles de communication en effectuant une opération de suivi.
